# EUROPEAN PATENT SPECIFICATION

(11) **EP 2 161 137 B1**
(45) Date of publication and mention of the grant of the patent: **05.03.2014**
(21) Application number: 09167960.5
(22) Date of filing: 17.08.2009
(51) Int. Cl.: B41J 25/308, C09D 11/10, B41J 3/32

(54) **Ultra-violet curable gellant inks for braille, raised print, and regular print applications**
Ultraviolett härtbare, gelbildende Tinten für Braille, erhöhten Druck und regelmäßigen Druckanwendungen
Encres gélifiantes durcissables à ultraviolets pour une impression en braille et applications d'impressions régulières

(30) Priority: 04.09.2008 US 204269
(43) Date of publication of application: 10.03.2010
(73) Proprietor: Xerox Corporation, Rochester, New York 14644 (US)
(72) Inventor: Belelie, Jennifer L., Oakville Ontario L6N 4A5 (CA); Chretien, Michelle, Mississauga Ontario L5M 7J5 (CA); Keoshkerian, Barkev, Thornhill Ontario L4J 7E8 (CA); Iftime, Gabriel, Mississauga Ontario L5N 4T1 (CA); Chopra, Naveen, Oakville Ontario L6H 6S7 (CA); Wagner, Christopher A., Etobicoke Ontario M9A 1L3 (CA); Odell, Peter G., Mississauga Ontario L5J 1L3 (CA); Smith, Paul F., Oakville Ontario L6J 2G2 (CA)
(74) Representative: Grünecker, Kinkeldey, Stockmair & Schwanhäusser

(56) References cited:
- US-A1- 2003 179 270
- US-A1- 2007 120 910
- US-A1- 2007 123 606
- US-A1- 2008 090 928
- US-A1- 2008 218 540
- US-B1- 6 644 763
- US-B2- 7 276 614
- US-B2- 7 279 587

## Description

Disclosed herein are ultra-violet curable gellant inks for ink jet printing on a substrate in Braille, raised print, regular print, or a combination thereof. Also described is a method for forming images comprising Braille, raised print, regular print, or a combination thereof with the described ultra-violet curable gellant inks.

Commonly assigned, co-pending U.S. Patent Application of Peter M. Kazmaier, Hadi K. Mahabadi, Paul F. Smith, Chris A. Wagner, Gabriel Iftime, and Tyler B. Norsten, Serial Number 11/613,759, entitled "Tactile Security Feature for Document and Signature Authentication," filed December 20, 2006 describes, in embodiments, a system and method create an authentication mark on a recording medium by depositing marking material on a medium in an image area to create a marking material image and to create a marking material authentication image. A predetermined amount of additional marking material is further deposited upon the medium in the authentication image area to increase an amount of marking material associated with the marking material authentication image in the authentication image area. The fixed marking material associated with the authentication image area is a tactilely perceptible authentication mark wherein the fixed marking material associated with the authentication mark has a height, with respect to a surface of the medium, that is tactilely perceptible.

U.S. Patent No. 6,644,763 describes a method for creating raised and special printing effects using ink jet technology. The method includes the steps of depositing a light curable photo-polymer material on the area selected for the printing effects, and curing the area. The amount of material to be deposited corresponds to the area selected for the printing effects and the height of the raised area relative to the medium on which the photo-polymer material is deposited. See the Abstract.

U.S. Patent No. 5,627,578 describes a method and device for raised letter or graphics printing, by means of a sprayed wet ink deposition on a print substrate. Subsequent dispensing of thermographic powder thereon, with adherence of the powder only to the wet ink, followed by heating to a fixing temperature of the powder, results in the raised lettering or graphics. A standard portable ink jet printer of the bubble jet type, controlled, with graphics software control, by a personal computer, provides the requisite non-contacting ink deposition. The dispensing cartridges of the ink jet printer are provided with non-contact-drying ink formulations (with two or more separate colors, if desired) for the portion of graphics or printing which is to be in raised form. A thermographic powder dispenser and heating member is connected to the output of the ink jet printer, or integrated therewith for completion of the raised printing process. Raised and non-raised printing is also possible by use of separately dispensed drying and non-drying inks. See the Abstract.

Ink jet printing devices are known in the art. For example, ink jet printing devices are generally of two types: continuous stream and drop-on-demand. In continuous stream ink jet systems, ink is emitted in a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet in order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium. There are generally three types of drop-on-demand ink jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (that is, liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In a typical design of a piezoelectric ink jet device, the image is applied by jetting appropriately colored inks during four to eighteen rotations (incremental movements) of a substrate, such as an image receiving member or intermediate transfer member, with respect to the ink jetting head. That is, there is a small translation of the print head with respect to the substrate in between each rotation. This approach simplifies the print head design, and the small movements ensure good droplet registration. At the jet operating temperature, droplets of liquid ink are ejected from the printing device. When the ink droplets contact the surface of the recording substrate, they quickly solidify to form a predetermined pattern of solidified ink drops.

Ink jet printing processes may employ inks that are solid at room temperature and liquid at elevated temperatures. Such inks may be referred to as solid inks, hot melt inks, phase change inks and the like. For example, U.S. Patent No. 4,490,731 discloses an apparatus for dispensing solid ink for printing on a substrate such as paper. In thermal ink jet printing processes employing hot melt inks, the solid ink is melted by the heater in the printing apparatus and utilized (jetted) as a liquid in a manner similar to that of conventional thermal ink jet printing. Upon contact with the printing substrate, the molten ink solidifies rapidly, enabling the colorant to substantially remain on the surface of the substrate instead of being carried into the substrate (for example, paper) by capillary action, thereby enabling higher print density than is generally obtained with liquid inks. Advantages of a phase change ink in ink jet printing are thus elimination of potential spillage of the ink during handling, a wide range of print density and quality, minimal paper cockle or distortion, and enablement of indefinite periods of nonprinting without the danger of nozzle clogging, even without capping the nozzles.

The use of ink jet printers in forming raised printed images is also known, for example, as indicated in U.S. Patents Nos. 6,644,763 and 5,627,578 above. However, these printers for forming raised images are typically dedicated machines designed and used solely for raised print applications, such as forming Braille images. Where a user requires only a certain portion of print jobs to be done utilizing raised print, it can be costly for the user to have two print devices, one strictly for the raised print jobs.

There are two main technologies available for printing Braille and raised characters: embossing and thermal paper expansion. As described above, these devices are dedicated to raised print. A printer capable of producing both normal (non-raised or "regular" print) and raised print and Braille is greatly needed. For example, government and large institutions which are required by law to provide Braille prints for visually impaired persons would greatly benefit from such a device. A dual mode printer capable of printing normal prints and Braille and raised print is greatly needed by government and educational entities. Currently, there is one printer on the market that can print both Braille and normal text which printer utilizes a physical embosser. This device produces lines made from dots which provides poor image resolution and is unable to print variable height graphs and images. When required, variable heights such as graphs are typically fabricated by hand using a thermoform process. Further, embossers are extremely noisy machines, requiring acoustic cabinets. Thermal expansion paper is also very expensive, typically over $1.00 per sheet, requires a complicated and slow two-step printing process, and is limited to specialty plastic-like substrates.

There is further a need for raised text printing in conjunction with Braille characters that is impossible to achieve with existing technologies. For example, Braille representations of mathematical and chemical equations and financial formulae are extremely large and cumbersome. There is a need for a spatially economical method to employ raised characters and figures for these applications.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops. Phase change inks have also been used in other printing technologies, such as gravure printing, as disclosed in, for example, U.S. Patent 5,496,879 and German Patent Publications DE 4205636 and DE 4205713.

Phase change inks for color printing typically comprise a phase change ink carrier composition which is combined with a phase change ink compatible colorant. In a specific embodiment, a series of colored phase change inks can be formed by combining ink carrier compositions with compatible subtractive primary colorants. The subtractive primary colored phase change inks can comprise four component dyes or pigments, namely, cyan, magenta, yellow and black, although the inks are not limited to these four colors. These subtractive primary colored inks can be formed by using a single dye or pigment or a mixture of dyes, pigments, or a combination thereof. For example, magenta can be obtained by using a mixture of Solvent Red Dyes or a composite black can be obtained by mixing several dyes. U.S. Patent 4,889,560, U.S. Patent 4,889,761, and U.S. Patent 5,372,852 teach that the subtractive primary colorants employed can comprise dyes from the classes of Color Index (C.I.) Solvent Dyes, Disperse Dyes, modified Acid and Direct Dyes, and Basic Dyes. The colorants can also include pigments, as disclosed in, for example, U.S. Patent 5,221,335. U.S. Patent 5,621,022 discloses the use of a specific class of polymeric dyes in phase change ink compositions.

Phase change inks have also been used for applications such as postal marking, industrial marking, and labeling.

Phase change inks are desirable for ink jet printers because they remain in a solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording substrate (for example, paper, transparency material, and the like), the droplets solidify immediately upon contact with the substrate, so that migration of ink along the printing medium is prevented and dot quality is improved.

Radiation curable inks generally comprise at least one curable monomer, a colorant, and a radiation activated initiator, specifically a photoinitiator, that initiates polymerization of curable components of the ink, specifically of the curable monomer.

U.S. Patent 7,279,587 of Peter G. Odell, Eniko Toma, and Jennifer L. Belelie discloses photoinitiating compounds useful in curable phase change ink compositions. In embodiments, a compound of the formula 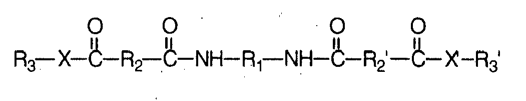 is disclosed wherein R₁ is an alkylene, arylene, arylalkylene, or alkylarylene group, R₂ and R₂' each, independently of the other, are alkylene, arylene, arylalkylene, or alkylarylene groups, R₃ and R₃' each, independently of the other, are either (a) photoinitiating groups, or (b) groups which are alkyl, aryl, arylalkyl, or alkylaryl groups, provided that at least one of R₃ and R₃' is a photoinitiating group, and X and X' each, independently of the other, is an oxygen atom or a group of the formula -NR₄-, wherein R₄ is a hydrogen atom, an alkyl group, an aryl group, an arylalkyl group, or an alkylaryl group.

U.S. Patent Publication 20070120910, Serial Number 11/290,202, Published May 31, 2007, of Peter G. Odell, Eniko Toma, and Jennifer L. Belelie, entitled "Phase Change Inks Containing Photoinitiator With Phase Change Properties and Gellant Affinity," describes, in embodiments, a phase change ink comprising a colorant, an initiator, and an ink vehicle, said ink vehicle comprising (a) at least one radically curable monomer compound, and (b) a compound of the formula 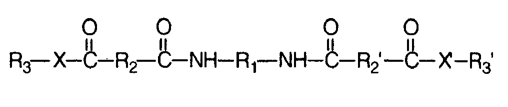 wherein R₁ is an alkylene, arylene, arylalkylene, or alkylarylene group, R₂ and R₂' each, independently of the other, are alkylene, arylene, arylalkylene, or alkylarylene groups, R₃ and R₃' each, independently of the other, are either (a) photoinitiating groups, or (b) groups which are alkyl, aryl, arylalkyl, or alkylaryl groups, provided that at least one of R₃ and R₃' is a photoinitiating group, and X and X' each, independently of the other, is an oxygen atom or a group of the formula -NR₄-, wherein R₄ is a hydrogen atom, an alkyl group, an aryl group, an arylalkyl group, or an alkylaryl group.

U.S. Patent 7,279,587 of Jennifer L. Belelie, Adela Goredema, Peter G. Odell, and Eniko Toma entitled "Method for Preparing Curable Amide Gellant Compounds," issued August 21, 2007 describes, in embodiments, a process for preparing a compound of the formula 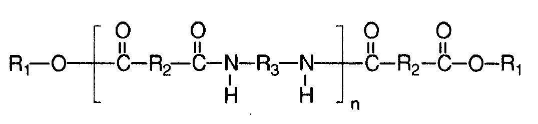 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 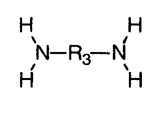 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.

U.S. Patent 7,276,614 of Eniko Toma, Peter G. Odell, Adela Goredema, and Jennifer L. Belelie, entitled "Curable Amide Gellant Compounds," issued October 2, 2007 describes, in embodiments, a compound of the formula 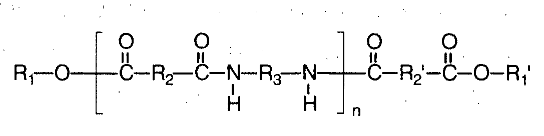 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.

U. S. Patent Publication 20070123606, Serial Number 11/290,121, Published May 31, 2007, of Eniko Toma, Jennifer L. Belelie, and Peter G. Odell entitled "Phase Change Inks Containing Curable Amide Gellant Compounds," describes, in embodiments, a phase change ink comprising a colorant, an initiator, and a phase change ink carrier, said carrier comprising at least one radically curable monomer compound and a compound of the formula 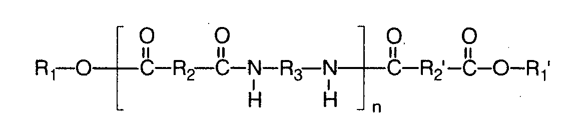 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.

U.S. Patent 7,271,284 of Eniko Toma, Adela Goredema, Jennifer L. Belelie, and Peter G. Odell entitled "Process for Making Curable Amide Gellant Compounds," issued September 18, 2007 describes, in embodiments, a process for preparing a compound of the formula 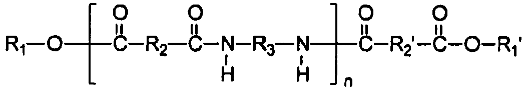 having substituents as defined therein.

US-A-2008/0090928 discloses an ink set comprised of at least one radiation-curable fluorescent ink comprising at least one curable monomer or oligomer, optionally at least one photoinitiator, and at least one fluorescent material, wherein upon exposure to activating energy, the fluorescent material fluoresces to cause a visible change in the appearance of the ink.

US-A-2003/0179270 discloses an inkjet printer for performing printing by ejecting ink onto a print media through an inkiet print head, comprising ink curing means for immediately curing the ink that has been ejected on the print media, wherein the inkjet printer repeats an ink election of ejecting the ink onto the print media by the ink-jet print head and an ink cure of curing the ink ejected on the print media by the ink curing means immediately following this ink election.

US patent 7,279,587 relates to photoinitiating compounds with phase change properties and gellant affinity particularly compatible with or useful as compositions useful in curable phase change ink compositions.

US patent 7,276,614 relates to curable ester-terminated oligoamide gellant compounds and ink compositions containing therein.

While known compositions and processes are suitable for their intended purposes, a need remains for a method to produce one or a combination as desired of robust raised print, Braille, and regular print images. Further, a need remains for a robust marking material compatible with a printing device that can produce a combination of raised print and regular images.
Fig. 1 is a side view of one apparatus for use in conjunction with embodiments herein.
Fig. 2 is a perspective view of an apparatus similar to that shown in Fig. 1.
Fig. 3 is a schematic depiction of an embodiment herein including depositing the present marking material directly to a substrate.
Fig. 4 is a representation of digitally generated ultra-violet curable gellant ink dots.

### DETAILED DESCRIPTION

The present invention provides an ink jet printing device comprising:
an ink jet print head and a print region surface toward which ink is jetted from the ink jet print head, wherein a height distance between the ink jet print head and the print region surface is adjustable;
wherein the ink jet printing device comprises an ultra-violet curable phase change ink composition comprising an optional colorant and a phase change ink vehicle comprising a radiation curable monomer or prepolymer; a photoinitiator; a reactive wax; a gellant; and an amine synergist;
wherein the gellant is a compound of the formula 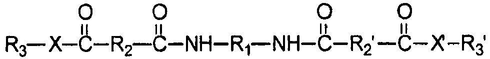
wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group; and
wherein a print deposited upon the print region surface is Braille, raised print, or a combination of regular print and one or both Braille and raised print.

The present invention also provides a method for forming an image on a substrate with an ink jet printing device comprising an ink jet print head and a print region surface toward which ink is jetted from the ink jet print head, wherein a height distance between the ink jet print head and the print region surface is adjustable, wherein the ink jet print head jets an ultra-violet curable phase change ink composition comprising an optional colorant and a phase change ink vehicle comprising a radiation curable monomer or prepolymer; a photoinitiator; a reactive wax; a gellant; and an amine synergist;
wherein the gellant is a compound of the formula 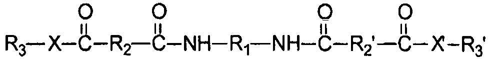 wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group;
the method comprising
determining if the image is to be printed having a regular print height, a raised print height, or a combination of both, and
printing the image with the print height(s) by jetting ink from the ink jet print head,
wherein for images or portions thereof to have a raised print height, forming the raised print height by depositing multiple layers of the ink in locations of the image or portion thereof to have the raised print height, and adjusting to increase the height distance between the ink jet print head and the print region surface as necessary to prevent the raised print locations from contacting the ink jet print head during formation; and
wherein a print deposited upon the print region surface is Braille, or a combination of regular print and one or both of Braille and raised print.

Advantages of the apparatus, methods and materials herein include that raised print, for example Braille and raised graphs, can be formed using a same device capable of also producing regular height print images. The dual ink jet printing device is thus cost effective in avoiding a user having to have both a dedicated raised height printing device and a regular printing device. Further advantages include production of robust raised print, Braille, and regular print images. Printed dots produced herein are extremely resistant to damage by touch as compared to embossed dots prepared using commercially available embossed print. The ultra-violet curable phase change gellant inks herein are extremely robust. The gel nature of the material at room temperature prevents spread or migration of the printed droplet and enables facile formation of Braille, raised print, or regular print markings on a wide variety of substrates. Advantages further include print on demand of any document including one or a combination of robust raised print, Braille and regular print and wherein the height can be controlled for the software and printer system. Documents can simply be reprinted as needed eliminating the difficulty of copying a document in raised print using previous methods, particularly when the document contains graphs or drawings because the graphs or drawings are handmade. Further advantages include ability to create differing texture effects such as by adding particles to the inks. Further, the dots can be colored with the color selected to convey additional information such as to non-blind individuals. Currently, there is no simple way to annotate Braille text on a printed page that would allow universal identification. The present disclosure enables, for example, green Braille selected to signify financial documents, red Braille selected to signify legal documents, and so forth.

Any suitable printing device may used herein. In one embodiment, the apparatus is an ink jet printing device as described in commonly assigned, co-pending U.S. Patent Application of Gabriel Iftime et al, Serial Number 11/683,011, entitled "Dual Printer for Regular and Raised Print," filed March 7, 2007, that includes at least an ink jet print head and a print region surface toward which ink is jetted from the ink jet print head, wherein a height distance between the ink jet print head and the print region surface is adjustable.

The apparatus, as well as the methods herein, may be employed with any desired printing system and marking material suitable for applying a marking material in an imagewise pattern to an intermediate transfer member or directly to an image receiving substrate, such as thermal ink jet printing (both with inks liquid at room temperature and with phase change inks), piezoelectric ink jet printing (both with inks liquid at room temperature and with phase change inks), acoustic ink jet printing (both with inks liquid at room temperature and with phase change inks), thermal transfer printing, gravure printing, electrostatographic printing methods (both those employing dry marking materials and those employing liquid marking materials), and the like. For the purpose of illustration, a piezoelectric phase change ink jet printer for applying marking material in an imagewise pattern to an intermediate transfer member is described.

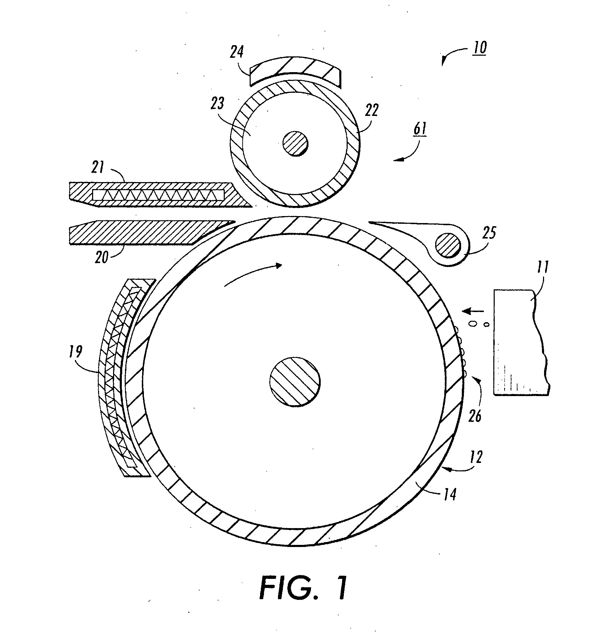

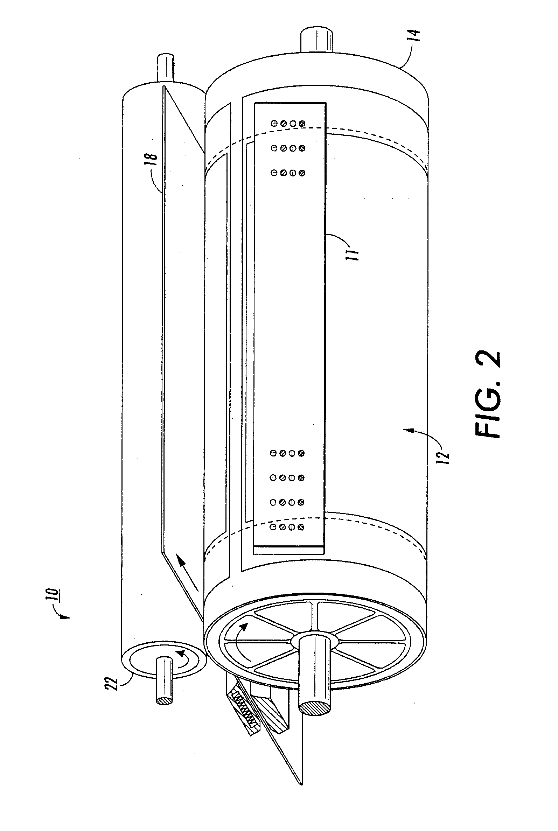

Figures 1 and 2 diagrammatical illustrate an example of a suitable imaging apparatus 10 for forming an image on an intermediate transfer member and subsequently transferring that image from the intermediate transfer member to a final image receiving substrate. The illustrated imaging apparatus 10 includes an intermediate transfer member 14. A marking material applicator, in this case an ink jet head, 11 applies marking material in an imagewise pattern 26 onto the surface 12 of the intermediate transfer member. This surface 12 is a print region surface toward which the ink jet head 11 jets the marking material in forming an image. In this illustrated case, the print region surface is the intermediate transfer member surface.

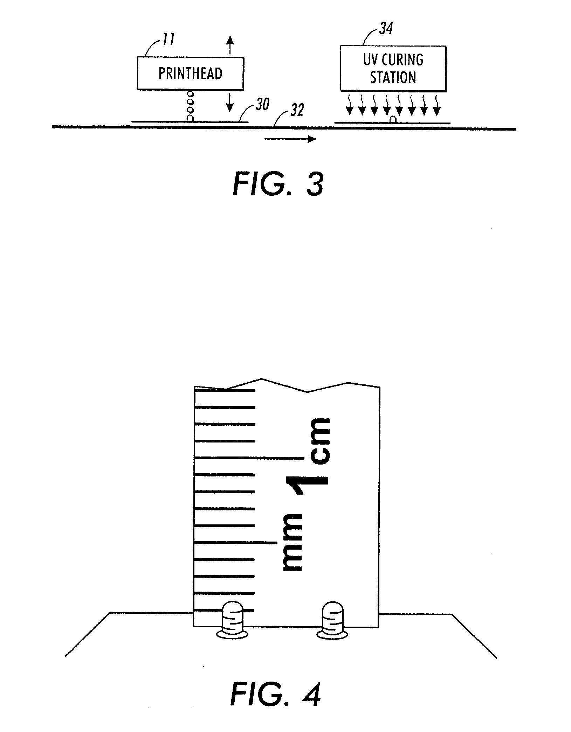

However, in embodiments wherein the marking material is jetted directly to an image receiving substrate such as paper, the print region surface would be the surface of the image receiving substrate, as shown in Figure 3.

In the Figures, the intermediate transfer member 14 is shown as a roll or drum. However, it may have any suitable form, for example including a belt, web, platen, or any other suitable design.

As shown in Figures 1 and 2, the apparatus may also include a transferring apparatus 61 including, for example, a transfer roll 22 where the imagewise pattern of marking material from the intermediate transfer member surface is transferred onto an image receiving substrate 18. An optional image receiving substrate guide 20 may be used to pass the image receiving substrate from a feed device (not shown) and guide the substrate through the nip formed by the opposing arcuate surfaces of the roll 22 and the intermediate transfer member 14. Optional stripper fingers 25 may be mounted to the imaging apparatus 10 to assist in removing the image receiving substrate from the surface of the intermediate transfer member 14. Roll 22 may have a metallic core 23, such as steel, with an elastomeric covering such as, for example, urethanes, nitriles, ethylene propylene diene monomer rubber (EPDM), and other appropriately resilient materials. Fusing of the image on the image receiving substrate may also be effected at this transferring apparatus.

Once the image 26 enters the nip, it is transferred to its final image conformation and adheres or is fixed to the image receiving substrate either by the pressure exerted against the image 26 on the substrate 18 by the roll 22 alone, or by the combination of the pressure and heat supplied by optional heater 21 and/or optional heater 19. Optional heater 24 may also be employed to supply heat to facilitate the process at this point. Once adhered and/or fused to the image receiving substrate, the image is cooled to ambient temperature, for example from about 22 to about 27°C.

The ink jet print head 11 may be supported by an appropriate housing and support elements (not shown). In conventional image forming devices, the ink jet print head is mounted so as to be stationary, or at most is mounted so as to be a fixed distance from the print region surface but movable axially across the face of the print region, for example movable in a direction toward and away from a viewer viewing Figure 1. In embodiments herein the ultra-violet gellant inks herein are designed to work with a direct to paper printer.

In the apparatus of embodiments herein, however, the ink jet print head is mounted so as to be adjustable in distance with respect to the distance between the ink jet print head and the print region surface, also referred to herein as the height distance between the ink jet print head and the print region surface.

In embodiments, the ink jet print head is positioned in a standard position for forming regular height images on an image receiving substrate. A regular height image typically has a print height of from 5 µm to 15 µm for a single color, for example of 10 µm, which may thus be as high as 20 to 45 µm for stacked multiple colors, for example in portions of a full color printed image. For this, the ink jet print head may be positioned from 80 µm to 200 µm, for example 100 µm, from the print region surface toward which the head will jet marking material.

In embodiments, this "regular height position" of the ink jet print head will represent a first height distance, which may be a minimum height distance, between the ink jet print head and the print region surface, and in which the print head is at its closest position to the print region surface.

While this first position of the ink jet print head is acceptable for printing regular height single or multi-color images, a difficulty arises when attempting to form raised height images. For example, for Braille applications, the height of the image should be at least 200 µm in order for the image to be readily detected and properly deciphered by touch. If it is attempted to build-up the height of the image to over 200 µm, for example through known techniques such as multiple passes with the ink jet print head, the ink jet print head will ultimately contact and damage the printed image. There is thus a print height limit beyond which a standard ink jet printing device cannot print. This is why standard ink jet printers are not used in forming raised height images, and why users are forced to purchase separate printing devices that are dedicated to forming raised height images.

Herein, the ink jet print head is adjustable in spacing with respect to the print region surface so as to permit the ink jet print head to be moved from the above described first position for regular height printing to a second height distance that is greater than (that is, the spacing between the ink jet print head and the print region surface is greater than) the first height distance. The second height distance is not fixed, and can be varied as necessary for a given printing. Moreover, the second height distance can itself be changed during a printing, as necessary. For example, it may be desirable to adjust the height distance from the first position to a second position as an image is built-up by the ink jet print head, and then as the image continues to be built-up, to adjust the ink jet print head from the second position to a third position in which the spacing from the print region surface is even further increased, and so on as necessary to complete build-up of the image.

In building up an image, for example by way of multiple passes of the print head over the portions of the image to include raised images, each layer of the image may have a print height of from 4 µm to 12 µm. An appropriate number of passes or ink jettings may be selected so that a raised image can be built up to a desired total print height, for example of at least 80 µm, such as from 80 µm to 600 µm, or from 300 µm to 500 µm. In this way, the standards set by the National Library For The Blind And Physically Handicapped Materials Development Center can be achieved. Specifically, the standards are dot height: 0.020 inches (0.51 mm); dot spacing: 0.09 inches (2.29 mm); character spacing: 0.240 inches (6.10 mm); and line spacing: 0.40 inches (10.16 mm).

The ink jet head may support single color or full color printing. In full color printing, the ink jet head typically includes different channels for printing the different colors. As illustrated in Fig. 2, the ink jet head may include four different sets of channels, for example one for each of cyan, magenta, yellow and black. In such embodiments, the print head is capable of printing either full color regular height prints when the ink jet head is set at a minimum distance from the print region surface, or raised height prints of any color combination when the ink jet head is at a distance greater than the minimum distance from the print region surface.

For the ink jet print head, any suitable height adjustment mechanism may be used.

The height adjustment mechanism may be controlled by a controller, which may be a same controller that controls the ink jetting of the ink jet print head. In this way, the ink jet print head height distance from the print region surface can be appropriately adjusted as required during printing of a raised height image.

Figure 3 illustrates schematically an embodiment wherein the movable print head 11 jets ink droplets in an imagewise pattern directly to a substrate 30, with movement of the print head 11 depicted by the vertical arrows. The substrate 30 can then move along belt 32 in the direction shown by the single arrow toward the UV curing station 34 where the printed image is cured. Various embodiments are contemplated herein including comprising, for example, multiple passes through a single printing and curing station, several printing and curing stations disposed successively in turn, among others.

For raised height printing, the printed image may be formed by any suitable ink jet process that can form images on a substrate with a desired height. For example, the raised printed markings may be formed with appropriate multiple passing of the ink jet print head over the portions requiring the raised height. Jetting of ink from multiple different ink jets of the ink jet head toward a same location of the image during a single pass may also be used to form raised height images. As discussed above, each layer of ink may add from 4 µm to 12 µm in height to the image height. Knowing the total print height desired the appropriate number of passes or jettings may be readily determined.

In forming images using a dual printing device such as described herein, a first step may be to determine if the image is to be printed having a regular print height, a raised print height, or a combination of both. A controller may then control the ink jet print head to deposit the appropriate amount and/or layers of ink at locations of the image so as to obtain the image with the desired print heights therein.

As marking materials for forming the printed image, any marking material that is capable of forming a regular height or a raised height printed image may be used. In this regard, solid or phase change ink marking materials are suitable for paper substrates. It may be more difficult to use liquid ink marking materials on paper substrates, as such tend to absorb into the paper substrate rather than build height thereon. Liquid ink marking materials can be used in certain applications and/or used when height building measures are taken, for example using gellants, UV curing or blue light curing to prevent substantial diffusion into the paper substrate.

Any conventional marking materials, inclusive of inks and toners, may be used. Examples of suitable marking materials include inks, including lithographic and flexographic inks, aqueous inks, including those suitable for use with ink jet printing processes, liquid and dry toner materials suitable for use in electrostatic imaging processes, solid hot melt inks, including those suitable for use with ink jet printing processes, and the like. As indicated above, solid inks may provide particularly desirable control and results.

Such marking materials typically comprise at least a vehicle with a colorant such as pigment, dye, mixtures of pigments, mixtures of dyes, or mixtures of pigments and dyes, therein.

In specific embodiments herein, the marking material comprises an ultra-violet curable phase change ink composition comprising an optional colorant and a phase change in vehicle comprising at least one radiation curable monomer or prepolymer; a photoinitiator; a reactive wax; and a gellant.

The colorant may be present in a colored marking material in any desired amount, for example from 0.5 to 75% by weight of the marking material, for example from 1 to 50% or from 1 to 25%, by weight of the marking material.

As colorants, examples may include any dye or pigment capable of being dispersed or dissolved in the vehicle. Blue D6840, D7080 (BASF); Sudan Blue OS (BASF); Neopen Blue FF4012 (BASF); PV Fast Blue B2GO1 (Clariant); Irgalite Blue BCA (Ciba); Paliogen Blue 6470 (BASF); Sudan Orange G (Aldrich); Sudan Orange 220 (BASF); Paliogen Orange 3040 (BASF); Paliogen Yellow 152, 1560 (BASF); Lithol Fast Yellow 0991 K (BASF); Paliotol Yellow 1840 (BASF); Novoperm Yellow FGL (Clariant); Lumogen Yellow D0790 (BASF); Suco-Yellow L1250 (BASF); Suco-Yellow D1355 (BASF); Suco Fast Yellow DI 355, DI 351 (BASF); Hostaperm Pink E 02 (Clariant); Hansa Brilliant Yellow 5GX03 (Clariant); Permanent Yellow GRL 02 (Clariant); Permanent Rubine L6B 05 (Clariant); Fanal Pink D4830 (BASF); Cinquasia Magenta (Du Pont), Paliogen Black L0084 (BASF); Pigment Black K801 (BASF); and carbon blacks such as REGAL 330™ (Cabot), Carbon Black 5250, Carbon Black 5750 (Columbia Chemical), mixtures thereof and the like. Examples of suitable dyes include Usharect Blue 86 (Direct Blue 86), available from Ushanti Color; Intralite Turquoise 8GL (Direct Blue 86), available from Classic Dyestuffs; Chemictive Brilliant Red 7BH (Reactive Red 4), available from Chemiequip; Levafix Black EB, available from Bayer; Reactron Red H8B (Reactive Red 31), available from Atlas Dye-Chem; D&C Red #28 (Acid Red 92), available from Warner-Jenkinson; Direct Brilliant Pink B, available from Global Colors; Acid Tartrazine, available from Metrochem Industries; Cartasol Yellow 6GF Clariant; Carta Blue 2GL, available from Clariant; and the like. Example solvent dyes include spirit soluble dyes such as Neozapon Red 492 (BASF); Orasol Red G (Ciba); Direct Brilliant Pink B (Global Colors); Aizen Spilon Red C-BH (Hodogaya Chemical); Kayanol Red 3BL (Nippon Kayaku); Spirit Fast Yellow 3G; Aizen Spilon Yellow C-GNH (Hodogaya Chemical); Cartasol Brilliant Yellow 4GF (Clariant); Pergasol Yellow CGP (Ciba); Orasol Black RLP (Ciba); Savinyl Black RLS (Clariant); Morfast Black Conc. A (Rohm and Haas); Orasol Blue GN (Ciba); Savinyl Blue GLS (Sandoz); Luxol Fast Blue MBSN (Pylam); Sevron Blue 5GMF (Classic Dyestuffs); Basacid Blue 750 (BASF), Neozapon Black X51 [C.I. Solvent Black, C.I. 12195]

The radiation curable phase change gellant inks herein can be cured after deposition of each layer in a raised height image if desired. Alternately, in the interest of time, the inks can be cured upon completion of deposition of all layers of the raised height image. Of course, if a regular image is created, the inks can be cured after deposition of the regular image.

In specific embodiments, the ink vehicles disclosed herein can comprise any suitable curable monomer or prepolymer. Examples of suitable materials include radically curable monomer compounds, such as acrylate and methacrylate monomer compounds, which are suitable for use as phase change ink carriers. Specific examples of relatively nonpolar acrylate and methacrylate monomers include (but are not limited to) isobornyl acrylate, isobornyl methacrylate, lauryl acrylate, lauryl methacrylate, isodecylacrylate, isodecylmethacrylate, caprolactone acrylate, 2-phenoxyethyl acrylate, isooctylacrylate, isooctylmethacrylate, butyl acrylate, and the like, as well as mixtures and combinations thereof. In addition, multifunctional acrylate and methacrylate monomers and oligomers can be included in the phase change ink carrier as reactive diluents and as materials that can increase the crosslink density of the cured image, thereby enhancing the toughness of the cured images. Examples of suitable multifunctional acrylate and methacrylate monomers and oligomers include (but are not limited to) pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, propoxylated neopentyl glycol diacrylate (available from Sartomer Co. Inc. as SR 9003), hexanediol diacrylate, tripropylene glycol diacrylate, dipropylene glycol diacrylate, amine modified polyether acrylates (available as PO 83 F, LR 8869, and/or LR 8889 (all available from BASF Corporation), trimethylolpropane triacrylate, glycerol propoxylate triacrylate, dipentaerythritol pentaacrylate, dipentaerythritol hexaacrylate, ethoxylated pentaerythritol tetraacrylate (available from Sartomer Co. Inc. as SR 494), and the like, as well as mixtures and combinations thereof. When a reactive diluent is added to the ink carrier material, the reactive diluent is added in any desired or effective amount, in one embodiment at least 1 percent by weight of the carrier, and in another embodiment at least 35 percent by weight of the carrier, and in one embodiment no more than 80 percent by weight of the carrier, and in another embodiment no more than 70 percent by weight of the carrier, although the amount of diluent can be outside of these ranges.

In embodiments, the ink vehicles contain at least one compound that can exhibit gel-like behavior in that it undergoes a relatively sharp increase in viscosity over a relatively narrow temperature range when dissolved in a liquid such as those compounds that behave as curable monomers when exposed to radiation such as ultraviolet light. One example of such a liquid curable monomer is a propoxylated neopentyl glycol diacrylate such as SR9003, commercially available from Sartomer Co. Inc.

In one embodiment, some compounds as disclosed herein undergo a change in viscosity of at least 10³ centipoise, in another embodiment at least 10⁵ centipoise, and in yet another embodiment at least 10⁶ centipoise over a temperature range of in one embodiment at least 30°C, in another embodiment at least 10°C, and in yet another embodiment at least 5°C, although the viscosity change and temperature range can be outside of these ranges, and compounds that do not undergo changes within these ranges are also included herein.

At least some embodiments of the compounds disclosed herein can form a semi-solid gel at a first temperature. For example, when the compound is incorporated into a phase change ink, this temperature is below the specific temperature at which the ink is jetted. The semi-solid gel phase is a physical gel that exists as a dynamic equilibrium comprising one or more solid gellant molecules and a liquid solvent. The semi-solid gel phase is a dynamic networked assembly of molecular components held together by non-covalent interactions such as hydrogen bonding, Van der Waals interactions, aromatic non-bonding interactions, ionic or coordination bonding, London dispersion forces, or the like, which, upon stimulation by physical forces, such as temperature, mechanical agitation, or the like, or chemical forces, such as pH, ionic strength, or the like, can undergo reversible transitions from liquid to semi-solid state at the macroscopic level. The solutions containing the gellant molecules exhibit a thermally reversible transition between the semi-solid gel state and the liquid state when the temperature is varied above or below the gel point of the solution. This reversible cycle of transitioning between semi-solid gel phase and liquid phase can be repeated many times in the solution formulation.

In specific embodiments, the ink vehicles disclosed herein can comprise any suitable photoinitiator. Examples of specific initiators include, but are not limited to, Irgacure® 127, Irgacure® 379, Irgacure® 819, all commercially available from Ciba Specialty Chemicals, among others. Further examples of suitable initiators include (but are not limited to) benzophenones, benzophenone derivatives, isopropyl thioxanthenones, arylsulphonium salts, aryl iodonium salts, benzyl ketones, monomeric hydroxyl ketones, polymeric hydroxyl ketones, α -amino ketones, acyl phosphine oxides, metallocenes, benzoin ethers, benzil ketals, α-hydroxyalkylphenones, α-aminoalkylphenones, acyl phosphine oxides, acylphosphine photoinitiators sold under the trade designations of IRGACURE and DAROCUR from Ciba, and the like. Specific examples include 1-hydroxy-cyclohexylphenylketone, benzophenone, 2-benzyl-2-(dimethylamino)-1-(4-(4-morphorlinyl)phenyl)-1-butanone, 2-methyl-1-(4-methylthio)phenyl-2-(4-morphorlinyl)-1-propanone, diphenyl-(2,4,6-trimethylbenzoyl) phosphine oxide, phenyl bis(2,4,6-trimethylbenzoyl) phosphine oxide, benzyl-dimethylketal, isopropylthioxanthone, 2,4,6-trimethylbenzoyldiphenylphosphine oxide (available as BASF LUCIRIN TPO), 2,4,6-trimethylbenzoylethoxyphenylphosphine oxide (available as BASF LUCIRIN TPO-L), bis(2,4,6-trimethylbenzoyl)-phenyl-phosphine oxide (available as Ciba IRGACURE 819) and other acyl phosphines, 2-methyl-1-(4-methylthio)phenyl-2-(4-morphorlinyl)-1-propanone (available as Ciba IRGACURE 907) and 1-(4-(2-hydroxyethoxy)phenyl)-2-hydroxy-2-methylpropan-1-one (available as Ciba IRGACURE 2959), 2-benzyl 2-dimethylamino 1-(4-morpholinophenyl) butanone-1 (available as Ciba IRGACURE 369), 2-hydroxy-1-(4-(4-(2-hydroxy-2-methylpropionyl)-benzyl)-phenyl)-2-methylpropan-1-one (available as Ciba IRGACURE 127), 2-dimethylamino-2-(4-methylbenzyl)-1-(4-morpholin-4-ylphenyl)-butanone (available as Ciba IRGACURE 379), titanocenes, isopropylthioxanthone, 1-hydroxy-cyclohexylphenylketone, benzophenone, 2,4,6-trimethylbenzophenone, 4-methylbenzophenone, diphenyl-(2,4,6-trimethylbenzoyl) phosphine oxide, 2,4,6-trimethylbenzoylphenylphosphinic acid ethyl ester, oligo(2-hydroxy-2-methyl-1-(4-(1-methylvinyl)phenyl) propanone), 2-hydroxy-2-methyl-1-phenyl-1-propanone, benzyl-dimethylketal, and the like, as well as mixtures thereof.

The phase change inks also contains an amine synergist, which are co-initiators which can donate a hydrogen atom to a photoinitiator and thereby form a radical species that initiates polymerization, and can also consume dissolved oxygen, which inhibits free-radical polymerization, thereby increasing the speed of polymerization. Examples of suitable amine synergists include (but are not limited to) ethyl-4-dimethylaminobenzoate, 2-ethylhexyl-4-dimethylaminobenzoate, and the like, as well as mixtures thereof.

Initiators for inks disclosed herein can absorb radiation at any desired or effective wavelength, in one embodiment at least 200 nanometers, and in one embodiment no more than 560 nanometers, and in another embodiment no more than 420 nanometers, although the wavelength can be outside of these ranges.

Optionally, the photoinitiator is present in the phase change ink in any desired or effective amount, in one embodiment at least 0.5 percent by weight of the ink composition, and in another embodiment at least 1 percent by weight of the ink composition, and in one embodiment no more than 15 percent by weight of the ink composition, and in another embodiment no more than 10 percent by weight of the ink composition, although the amount can be outside of these ranges.

Any suitable reactive wax can be used for the phase change in vehicles disclosed herein. In embodiments, the reactive wax comprises a curable wax component that is miscible with the other components and that will polymerize with the curable monomer to form a polymer. Inclusion of the wax promotes an increase in viscosity of the ink as it cools from the jetting temperature.

In embodiments, the reactive wax is a hydroxyl-terminated polyethylene wax functionalized with a polymerizable group. Suitable examples of waxes include, but are not limited to, those that are functionalized with curable groups. The curable groups may include, but are not limited to, acrylate, methacrylate, alkene, allylic ether, epoxide and oxetane. These waxes can be synthesized by the reaction of a wax equipped with a transformable functional group, such as carboxylic acid or hydroxyl.

Suitable examples of hydroxyl-terminated polyethylene waxes that may be functionalized with a curable group include, but are not limited to, mixtures of carbon chains with the structure CH₃-(CH₂)ₙ-CH₂OH, where there is a mixture of chain lengths, n, where the average chain length is in selected embodiments in the range of 16 to 50, and linear low molecular weight polyethylene, of similar average chain length. Suitable examples of such waxes include, but are not limited to, UNILIN® 350, UNILIN® 425, UNILIN® 550 and UNILIN® 700 with Mn approximately equal to 375, 460, 550 and 700 g/mol, respectively. All of these waxes are commercially available from Baker-Petrolite. Guerbet alcohols, characterized as 2,2-dialkyl-1-ethanols, are also suitable compounds. Specific embodiments of Guerbet alcohols include those containing 16 to 36 carbons, many of which are commercially available from Jarchem Industries Inc., Newark, NJ. In embodiments, PRIPOL® 2033 is selected, PRIPOL® 2033 being a C-36 dimer diol mixture including isomers of the formula 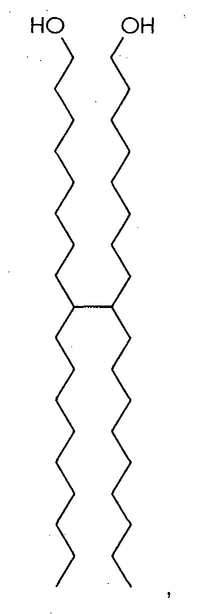 as well as other branched isomers which may include unsaturations and cyclic groups, available from Uniqema, New Castle, DE. Further information on C36 dimer diols of this type is disclosed in, for example, "Dimer Acids," Kirk-Othmer Encyclopedia of Chemical Technology, Vol. 8, 4th Ed. (1992), pp. 223 to 237. These alcohols can be reacted with carboxylic acids equipped with UV curable moieties to form reactive esters. Examples of these acids include, but are not limited to, acrylic and methacrylic acids, available from Sigma-Aldrich Co. Specific curable monomers include acrylates of UNILIN® 350, UNILIN® 425, UNILIN® 550 and UNILIN® 700.

Suitable examples of carboxylic acid-terminated polyethylene waxes that may be functionalized with a curable group include, but are not limited to, mixtures of carbon chains with the structure CH₃-(CH₂)ₙ-COOH, where there is a mixture of chain lengths, n, where the average chain length is in selected embodiments in the range of 16 to 50, and linear low molecular weight polyethylene, of similar average chain length. Suitable examples of such waxes include, but are not limited to, UNICID® 350, UNICID® 425, UNICID® 550 and UNICID® 700 with Mn equal to approximately 390, 475, 565 and 720 g/mol, respectively. Other suitable waxes have a structure CH₃-(CH₂)ₙ-COOH, such as hexadecanoic or palmitic acid with n=14, heptadecanoic or margaric or daturic acid with n=15, octadecanoic or stearic acid with n=16, eicosanoic or arachidic acid with n=18, docosanoic or behenic acid with n=20, tetracosanoic or lignoceric acid with n=22, hexacosanoic or cerotic acid with n=24, heptacosanoic or carboceric acid with n=25, octacosanoic or montanic acid with n=26, triacontanoic or melissic acid with n=28, dotriacontanoic or lacceroic acid with n=30, tritriacontanoic or ceromelissic or psyllic acid, with n=31, tetratriacontanoic or geddic acid with n=32, pentatriacontanoic or ceroplastic acid with n=33. Guerbet acids, characterized as 2,2-dialkyl ethanoic acids, are also suitable compounds. Selected Guerbet acids include those containing 16 to 36 carbons, many of which are commercially available from Jarchem Industries Inc., Newark, NJ. PRIPOL® 1009 (C-36 dimer acid mixture including isomers of the formula 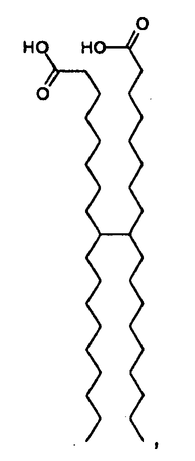 as well as other branched isomers which may include unsaturations and cyclic groups, available from Uniqema, New Castle, DE; further information on C36 dimer acids of this type is disclosed in, for example, "Dimer Acids," Kirk-Othmer Encyclopedia of Chemical Technology, Vol. 8, 4th Ed. (1992), pp. 223 to 237) can also be used. These carboxylic acids can be reacted with alcohols equipped with UV curable moieties to form reactive esters. Examples of these alcohols include, but are not limited to, 2-allyloxyethanol from Sigma-Aldrich Co.; 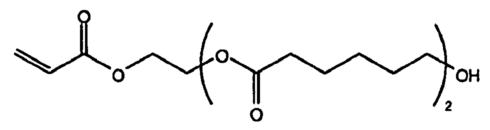 SR495B from Sartomer Company, Inc.; 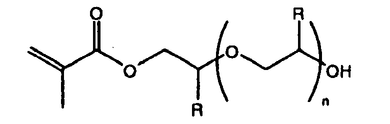 CD572 (R = H, n = 10) and SR604 (R = Me, n = 4) from Sartomer Company, Inc.

In embodiments, the optional curable wax is included in the ink in an amount of from, for example, 1 to 25% by weight of the ink, or from 2 to 20% by weight of the ink, or from 2.5 to 15% by weight of the ink, although the amounts can be outside of these ranges.

The curable monomer or prepolymer and curable wax together can form more than 50% by weight of the ink, or at least 70% by weight of the ink, or at least 80% by weight of the ink, although not limited.

Any suitable gellant can be used for the ink vehicles disclosed herein. In embodiments, a gellant such as described in U. S. Patent Application Serial No. 11/290,202, filed November 30, 2005, entitled "Phase Change Inks Containing Photoinitiator With Phase Change Properties and Gellant Affinity," with the named inventors Peter G. Odell, Eniko Toma, and Jennifer L. Belelie, can be used, wherein the gellant is a compound of the formula 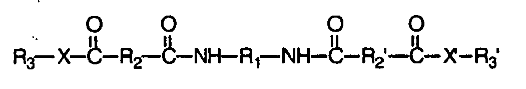 wherein R₁ is:
(i) an alkylene group (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 12 carbon atoms, in another embodiment with no more than 4 carbon atoms, and in yet another embodiment with no more than 2 carbon atoms, although the number of carbon atoms can be outside of these ranges,
(ii) an arylene group (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 6 carbon atoms, although the number of carbon atoms can be outside of these ranges,
(iii) an arylalkylene group (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, or
(iv) an alkylarylene group (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, pyridine groups, pyridinium groups, ether groups, aldehyde groups, ketone groups, ester groups, amide groups, carbonyl groups, thiocarbonyl groups, sulfide groups, nitro groups, nitroso groups, acyl groups, azo groups, urethane groups, urea groups, mixtures thereof, and the like, wherein two or more substituents can be joined together to form a ring;
R₂ and R₂^{'} each, independently of the other, are:
(i) alkylene groups (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 54 carbon atoms, and in another embodiment with no more than 36 carbon atoms, although the number of carbon atoms can be outside of these ranges,
(ii) arylene groups (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 7 carbon atoms, although the number of carbon atoms can be outside of these ranges,
(iii) arylalkylene groups (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than about 8 carbon atoms, although the number of carbon atoms can be outside of these ranges, or
(iv) alkylarylene groups (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, ether groups, aldehyde groups, ketone groups, ester groups, amide groups, carbonyl groups, thiocarbonyl groups, phosphine groups, phosphonium groups, phosphate groups, nitrile groups, mercapto groups, nitro groups, nitroso groups, acyl groups, acid anhydride groups, azide groups, azo groups, cyanato groups, urethane groups, urea groups, mixtures thereof, and the like, wherein two or more substituents can be joined together to form a ring;
R₃ and R₃' each, independently of the other, are either:
(a) photoinitiating groups, such as groups derived from 1-(4-(2-hydroxyethoxy)phenyl)-2-hydroxy-2-methylpropan-1-one, of the formula 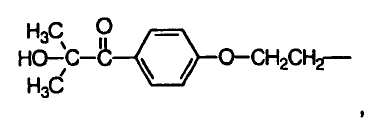 groups derived from 1-hydroxycyclohexylphenylketone, of the formula 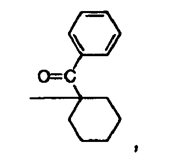 groups derived from 2-hydroxy-2-methyl-1-phenylpropan-1-one, of the formula 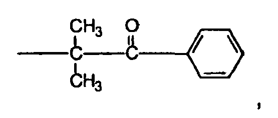 groups derived from *N,N*-dimethylethanolamine or *N,N-*dimethylethylenediamine, of the formula 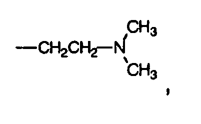 or the like, or:
(b) a group which is:
   (i) an alkyl group (including linear and branched, saturated and unsaturated, cyclic and acyclic, and substituted and unsubstituted alkyl groups, and wherein heteroatoms, such as oxygen, nitrogen, sulfur, silicon, phosphorus, boron, and the like either may or may not be present in the alkyl group), in one embodiment with at least 2 carbon atoms, in another embodiment with at least 3 carbon atoms, and in yet another embodiment with at least 4 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (ii) an aryl group (including substituted and unsubstituted aryl groups, and wherein heteroatoms, such as oxygen, nitrogen, sulfur, silicon, phosphorus, boron, and the like either may or may not be present in the aryl group), in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as phenyl or the like,
   (iii) an arylalkyl group (including substituted and unsubstituted arylalkyl groups, wherein the alkyl portion of the arylalkyl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkyl group), in one embodiment with at least about 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as benzyl or the like, or
   (iv) an alkylaryl group (including substituted and unsubstituted alkylaryl groups, wherein the alkyl portion of the alkylaryl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylaryl group), in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as tolyl or the like, wherein the substituents on the substituted alkyl, arylalkyl, and alkylaryl groups can be (but are not limited to) halogen atoms, ether groups, aldehyde groups, ketone groups, ester groups, amide groups, carbonyl groups, thiocarbonyl groups, sulfide groups, phosphine groups, phosphonium groups, phosphate groups, nitrile groups, mercapto groups, nitro groups, nitroso groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring;
   provided that at least one of R₃ and R₃' is a photoinitiating group;
   and X and X' each, independently of the other, is an oxygen atom or a group of the formula -NR₄-, wherein R₄ is:
   (i) a hydrogen atom;
   (ii) an alkyl group, including linear and branched, saturated and unsaturated, cyclic and acyclic, and substituted and unsubstituted alkyl groups, and wherein heteroatoms either may or may not be present in the alkyl group, in one embodiment with at least 1 carbon atom, and in one embodiment with no more than 100 carbon atoms, in another embodiment with no more than 60 carbon atoms, and in yet another embodiment with no more than 30 carbon atoms, although the number of carbon atoms can be outside of these ranges,
   (iii) an aryl group, including substituted and unsubstituted aryl groups, and wherein heteroatoms either may or may not be present in the aryl group, in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than about 30 carbon atoms, although the number of carbon atoms can be outside of these ranges, or
   (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, wherein the substituents on the substituted alkyl, aryl, arylalkyl, and alkylaryl groups can be (but are not limited to) halogen atoms, ether groups, aldehyde groups, ketone groups, ester groups, amide groups, carbonyl groups, thiocarbonyl groups, sulfate groups, sulfonate groups, sulfonic acid groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

In one specific embodiment, R₂ and R₂' are the same as each other; in another specific embodiment, R₂ and R₂' are different from each other. In one specific embodiment, R₃ and R₃' are the same as each other; in another specific embodiment, R₃ and R₃' are different from each other.

In one specific embodiment, R₂ and R₂' are each groups of the formula -C₃₄H₅₆₊ₐ- and are branched alkylene groups which may include unsaturations and cyclic groups, wherein a is an integer of 0, 1, 2, 3, 4, 5, 6, 7, 8, 9, 10, 11, or 12, including (but not limited to) isomers of the formula

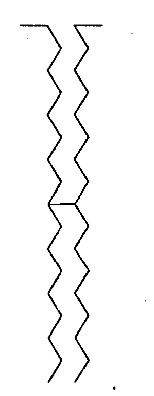

In one specific embodiment, R₁ is an ethylene (-CH₂CH₂-) group.

In one specific embodiment, R₃ and R₃' are both

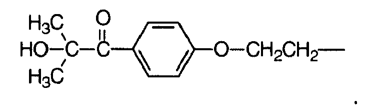

In one specific embodiment, the compound is of the formula 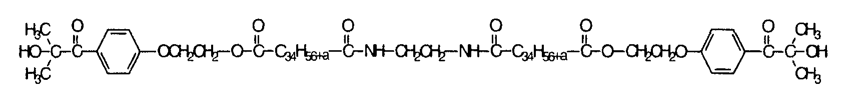 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including (but not limited to) isomers of the formula 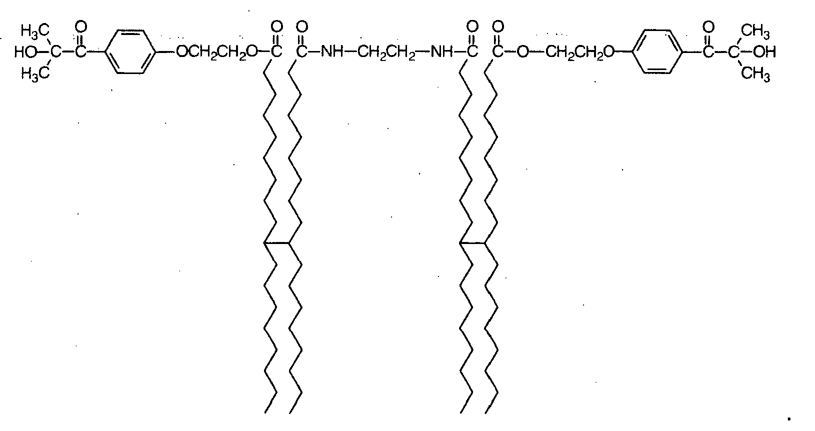 Additional specific examples of compounds of this formula include those of the formula 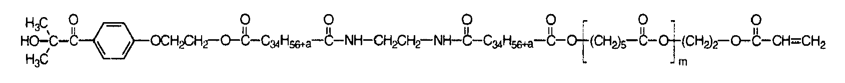 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein m is an integer, including but not limited to embodiments wherein m is 2, including (but not limited to) isomers of the formula 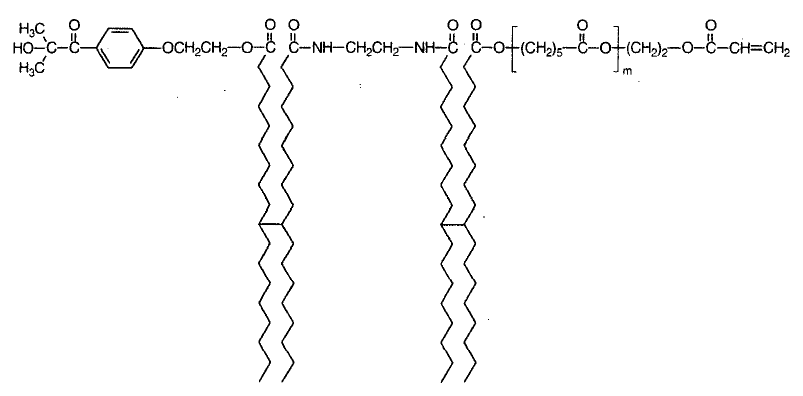 those of the formula 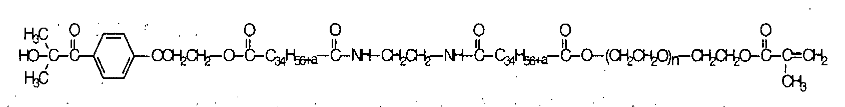 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein n is an integer, including but not limited to embodiments wherein n is 2 and wherein n is 5, including (but not limited to) isomers of the formula 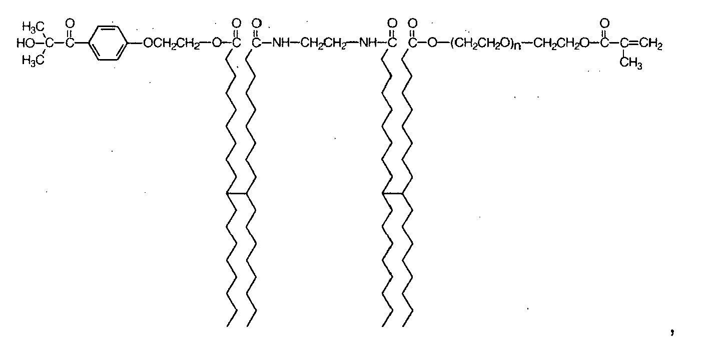 those of the formula 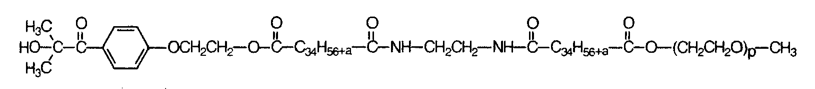 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein p is an integer, including but not limited to embodiments wherein p is 2 and wherein p is 3, including (but not limited to) isomers of the formula 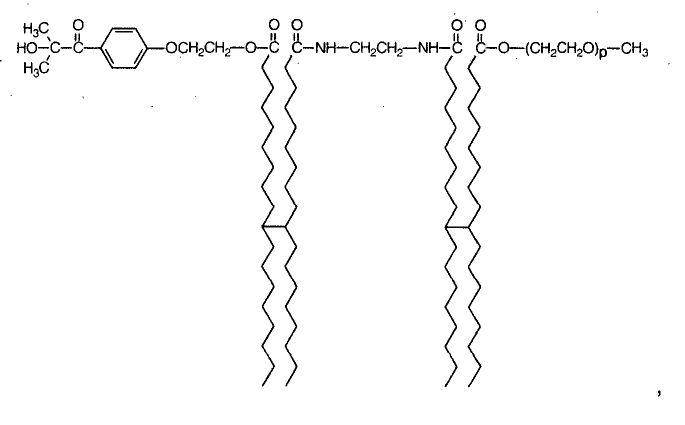 those of the formula 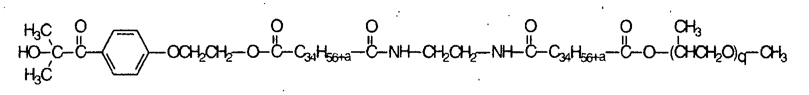 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein q is an integer, including but not limited to embodiments wherein q is 2 and wherein q is 3, including (but not limited to) isomers of the formula 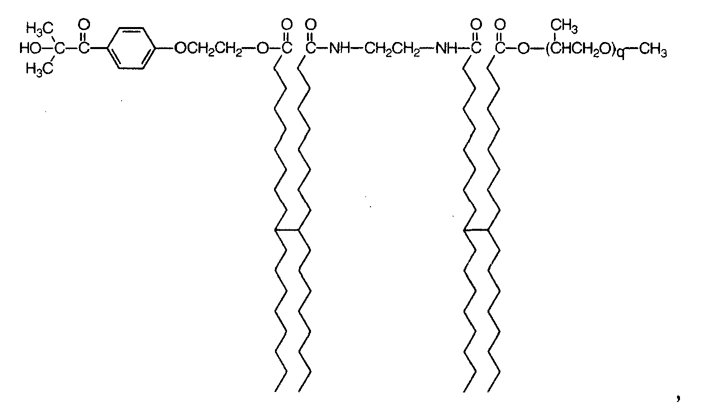 those of the formula 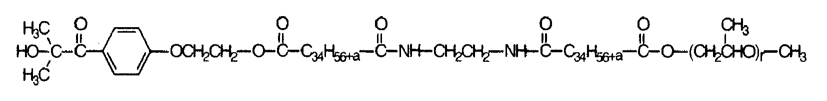 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein r is an integer, including but not limited to embodiments wherein r is 2 and wherein r is 3, including (but not limited to) isomers of the formula 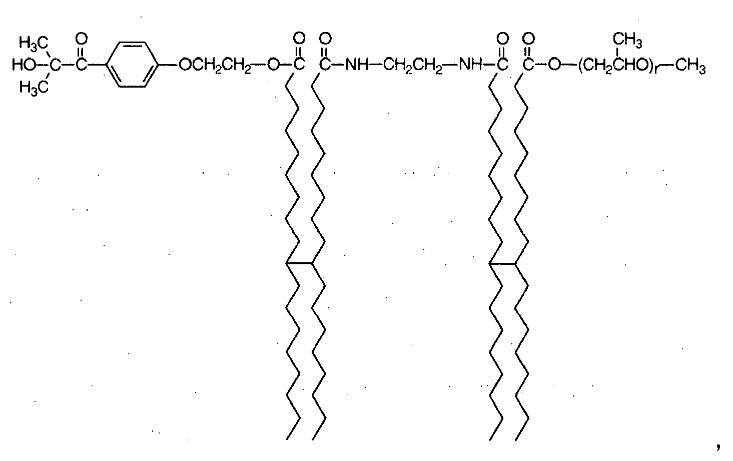 and the like, as well as mixtures thereof.

In embodiments, the gellant is a mixture of 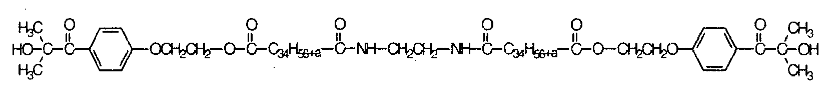 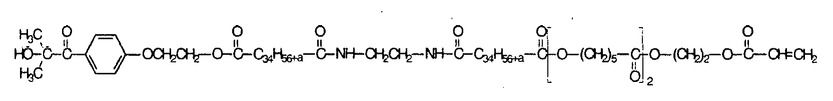 and 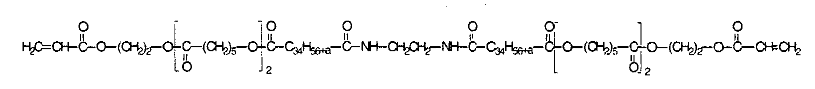 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

In embodiments, gellants herein can comprise materials disclosed in copending Application U.S. Serial No. 11/290,121, filed November 30, 2005, entitled "Phase Change Inks Containing Curable Amide Gellant Compounds," with the named inventors Eniko Toma, Jennifer L. Belelie, and Peter G. Odell, including a compound of the formula 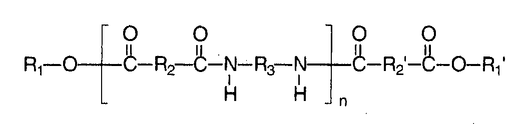 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.

The gellant compounds as disclosed herein can be prepared by any desired or effective method.

For example, in embodiments, gellants can be prepared as described in U. S. Patent 7,259,275, entitled "Method for Preparing Curable Amide Gellant Compounds," with the named inventors Jennifer L. Belelie, Adela Goredema, Peter G. Odell, and Eniko Toma, which describes a process for preparing a compound of the formula 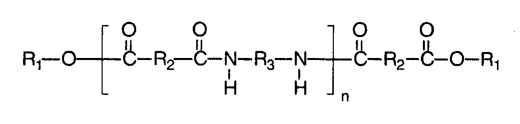 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 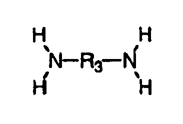 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.

The radiation curable phase change inks herein can also optionally contain an antioxidant. The optional antioxidants can protect the images from oxidation and can also protect the ink components from oxidation during the heating portion of the ink preparation process. Specific examples of suitable antioxidant stabilizers include (but are not limited to) NAUGARD® 524, NAUGARD® 635, NAUGARD® A, NAUGARD® 1-403, and NAUGARD® 959, commercially available from Crompton Corporation, Middlebury, CT; IRGANOX® 1010 and IRGASTAB® UV 10, commercially available from Ciba Specialty Chemicals; GENORAD 16 and GENORAD 40 commercially available from Rahn AG, Zurich, Switzerland, and the like, as well as mixtures thereof. When present, the optional antioxidant is present in the ink in any desired or effective amount, in one embodiment at least 0.01 percent by weight of the ink carrier, in another embodiment at least 0.1 percent by weight of the ink carrier, and in yet another embodiment at least 1 percent by weight of the ink carrier, and in one embodiment no more than 20 percent by weight of the ink carrier, in another embodiment no more than 5 percent by weight of the ink carrier, and in yet another embodiment no more than 3 percent by weight of the ink carrier, although the amount can be outside of these ranges.

The radiation curable phase change inks can also, if desired, contain additives to take advantage of the known functionality associated with such additives. Such additives may include, for example, defoamers, slip and leveling agents, pigment dispersants, and the like, as well as mixtures thereof. The inks can also include additional monomeric or polymeric materials as desired.

Curing of the ink can be effected by exposure of the ink image to actinic radiation at any desired or effective wavelength, in one embodiment at least 200 nanometers, and one embodiment no more than 480 nanometers, although the wavelength can be outside of these ranges. Exposure to actinic radiation can be for any desired or effective period of time, in one embodiment for at least 0.2 second, in another embodiment for at least 1 second, and in yet another embodiment for at least 5 seconds, and in one embodiment for no more than 30 seconds, and in another embodiment for no more than 15 seconds, although the exposure period can be outside of these ranges. By curing is meant that the curable compounds in the ink undergo an increase in molecular weight upon exposure to actinic radiation, such as (but not limited to) crosslinking, chain lengthening, or the like.

The ink compositions generally have melt viscosities at the jetting temperature (in one embodiment no lower than 50°C, in another embodiment no lower than 60°C, and in yet another embodiment no lower than 70°C, and in one embodiment no higher than 120°C, and in another embodiment no higher than 110°C, although the jetting temperature can be outside of these ranges) in one embodiment of no more than 30 centipoise, in another embodiment of no more than 20 centipoise, and in yet another embodiment of no more than 15 centipoise, and in one embodiment of no less than 2 centipoise, in another embodiment of no less than 5 centipoise, and in yet another embodiment of no less than 7 centipoise, although the melt viscosity can be outside of these ranges.

In one specific embodiment, the inks are jetted at low temperatures, in particular at temperatures below 110°C, in one embodiment from 40°C to 110°C, in another embodiment from 50°C to 110°C, and in yet another embodiment from 60°C to 90°C, although the jetting temperature can be outside of these ranges. At such low jetting temperatures, the conventional use of temperature differential between the jetted ink and the substrate upon which the ink is jetted to effect a rapid phase change in the ink (i.e., from liquid to solid) may not be effective. The gellant can thus be used to effect a rapid viscosity increase in the jetted ink upon the substrate. In particular, jetted ink droplets can be pinned into position on a receiving substrate such as a final recording substrate, such as paper or transparency material, or an intermediate transfer member, such as a transfuse drum or belt, that is maintained at a temperature cooler than the ink jetting temperature of the ink through the action of a phase change transition in which the ink undergoes a significant viscosity change from a liquid state to a gel state (or semi-solid state).

In some embodiments, the temperature at which the ink forms the gel state is any temperature below the jetting temperature of the ink, in one embodiment any temperature that is 5°C or more below the jetting temperature of the ink. In one embodiment, the gel state can be formed at a temperature of at least 25°C, and in another embodiment at a temperature of at least 30°C, and in one embodiment of no more than 100°C, in another embodiment of no more than 70°C, and in yet another embodiment of no more than 50°C, although the temperature can be outside of these ranges. A rapid and large increase in ink viscosity occurs upon cooling from the jetting temperature, at which the ink is in a liquid state, to the gel temperature, at which the ink is in the gel state. The viscosity increase is in one specific embodiment at least a 10^{2.5}-fold increase in viscosity.

A suitable gelling agent for the ink will gel the monomers/oligomers in the ink vehicle quickly and reversibly and will demonstrate a narrow phase change transition, for example within a temperature range of from 30°C to 100°C, preferably of from 30°C to 70°C, although the transition range can be outside of these temperature ranges. The gel state of the ink in one specific embodiment exhibits a minimum of 10^{2.5} centipoise, and in another specific embodiment 10³ centipoise, increase in viscosity at transferring temperatures, e.g., in one specific embodiment from 30°C to 70°C, compared to the viscosity at the jetting temperature. One specific embodiment is directed to gellant containing inks that rapidly increase in viscosity within from 5°C to 10°C below the jetting temperature and ultimately reach a viscosity above 10⁴ times the jetting viscosity, and in another embodiment 10⁵ times the jetting viscosity, although the viscosity can be outside of these ranges.

When the inks are in the gel state, the viscosity of the ink is in one embodiment at least 1,000 centipoise, in another embodiment at least 10,000 centipoise, and in yet another embodiment at least 100,000 centipoise, although the viscosity can be outside of these ranges. Viscosity values in the gel state are in one embodiment at least 10³ centipoise, and in another embodiment at least 10^{4.5} centipoise, and in one embodiment no more than 10⁹ centipoise, and in another embodiment no more than 10^{6.5} centipoise, although the gel state viscosity can be outside of these ranges. The preferred gel phase viscosity can vary with the print process. For example, the highest viscosities are preferred when jetting directly to porous paper, or when employing intermediate transfer, in order to minimize the effects of ink bleed and feathering. On the other hand, less porous substrates such as plastic may lead to the use of lower ink viscosities that control dot gain and agglomeration of individual ink pixels. The gel viscosity can be controlled by ink formulation and substrate temperature. An additional benefit of the gel state for radiation curable inks is that higher viscosities of 10³ to 10⁴ centipoise can reduce oxygen diffusion in the ink, which in turn can lead to a faster rate of cure in free radical initiation.

For printing applications wherein the ink is printed directly onto a final substrate, the viscosity of the ink in one specific embodiment increases to 10⁵ centipoise or greater at the final substrate temperature to prevent the ink from soaking into the final substrate and/or to facilitate adhesion to the final substrate until curing by exposure to radiation. In one specific embodiment, the temperature of the final substrate or the intermediate transfer member onto which the ink is printed and at which the ink viscosity increases to 10⁵ centipoise or greater is 50°C or lower.

The ink compositions can be prepared by any desired or suitable method. For example, the ink ingredients can be mixed together, followed by heating, to a temperature in one embodiment of at least 80°C, and in one embodiment of no more than 120°C, although the temperature can be outside of these ranges, and stirring until a homogeneous ink composition is obtained, followed by cooling the ink to ambient temperature (typically from 20°C to 25°C). The inks are solid at ambient temperature.

The inks can be employed in apparatus for direct printing ink jet processes and in indirect printing ink jet applications. Another embodiment disclosed herein is directed to a process which comprises incorporating an ink as disclosed herein into an ink jet printing apparatus, melting the ink, and causing droplets of the melted ink to be ejected in an imagewise pattern onto a recording substrate. A direct printing process is also disclosed in, for example, U.S. Patent 5,195,430. In one specific embodiment, the printing apparatus employs a piezoelectric printing process wherein droplets of the ink are caused to be ejected in imagewise pattern by oscillations of piezoelectric vibrating elements. Inks as disclosed herein can also be employed in other hot melt printing processes, such as hot melt acoustic ink jet printing, hot melt thermal ink jet printing, hot melt continuous stream or deflection ink jet printing, and the like. Phase change inks as disclosed herein can also be used in printing processes other than hot melt ink jet printing processes.

In a specific embodiment, the ultra-violet curable phase change gellant inks herein are employed in an ink jet printing device comprising an ink jet print head and a print region surface toward which ink is jetted from the ink jet print head, wherein a height distance between the ink jet print head and the print region surface is adjustable; wherein the ink jet print head jets an ultra-violet curable phase change ink composition as described herein.

Any suitable substrate or recording sheet can be employed, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, and the like, transparency materials, fabrics, textile products, plastics, polymeric films, inorganic substrates such as metals and wood, and the like.

In a specific embodiment, the substrate herein comprises a currency substrate, such as printed paper money, although not limited thereto. In May 2008, the U.S. Court of Appeals for the District of Columbia Circuit ruled that the U.S. Treasury Department is violating the law by failing to design and issue currency that is readily distinguishable to blind and visually impaired people. The ruling upheld a November 2006 decision by the U. S. District Court for the District of Columbia. These decisions could potentially force the Treasury Department to redesign U. S. currency.

In embodiments, herein, the ultra-violet curable gellant inks provide a material for tactile, raised print markings specifically for currency applications. Advantages of the instant inks, ink jet printing device, and method herein include a digital marking technology that enables robust markings that are able to withstand the often harsh conditions of currency usage. The digital aspect allows for easy customization of marking patterns and short printing runs and provides an acceptable method for identification purposes. The marking material herein is compatible with and able to adhere to a wide variety of substrates including currency material ranging from paper to plastics and textiles, although not limited. The ultraviolet curable gellant inks, ink jet printing device, and method are easily implemented and easily integrated into current currency printing processes. The raised print markings can be applied digitally allowing simultaneous and customizable printing of identification markings, security features, and Braille, alone or in combination. The inks provide robust jetting at elevated temperatures and mechanical stability at ambient substrate temperatures (that is, room temperature). After printing, the markings can be cured by ultraviolet radiation to provide robust structures.

In a further embodiment, the substrate can comprise bank notes and the inks here can provide robust raised dots or other markings thereon.

### EXAMPLES

Also, parts and percentages are by weight unless otherwise indicated.

### Illustrative Example 1* (*outside the scope of the claims)

An ultra-violet curable phase change gellant ink was prepared containing 7.5 percent by weight curable amide gellant as described in Example VIII of U. S. Patent 7,279,587, 5 percent by weight Unilin 350™ acrylate wax prepared as described in U. S. Patent Publication 2007120925, 5 percent by weight pentafunctional acrylate monomer (SR 399LV dipentaerythritol pentaacrylate available from Sartomer Co., Inc.), 72.8 percent by weight difunctionalacrylate monomer (propoxylated neopentyl glycol diacrylate SR 9003 available from Sartomer Co., Inc.), 3 percent by weight IRGACURE® 379 photoinitiator (obtained from Ciba Specialty Chemicals), 1 percent by weight IRGACURE® 819 photoinitiator (obtained from Ciba Specialty Chemicals), 3.5 percent by weight IRGACURE® 127 photoinitiator (obtained from Ciba Specialty Chemicals), and 2 percent by weight DAROCUR® ITX photoinitiator (obtained from Ciba Specialty Chemicals) and 0.2 percent by weight UV stabilizer (IRGASTAB® UV10, obtained from Ciba Specialty Chemicals). All of the components were stirred together at 90°C for 1 hour.

Dots were generated digitally using a Xerox Phaser® 860 printer firing with every third jet. After printing, the markings were cured by exposure to UV light from a UV Fusion LC-6B Benchtop Conveyor equipped with UV Fusion Light Hammer 6 Ultraviolet Lamp System employing a "D" bulb for a minimum of 1 seconds to provide robust structures. As illustrated in Figure 4, the digitally generated UV gel dots produced with the Phaser® 860 and the instant ultra-violet curable phase change gellant ink machine provided dots of a height which match or even exceed the minimum requirement set by the National Library for the Blind and Physically Handicapped Materials Development Center. The space between each dot in Figure 4 is about 5.5 millimeters.

## Claims

1. An ink jet printing device comprising:
an ink jet print head and a print region surface toward which ink is jetted from the ink jet print head, wherein a height distance between the ink jet print head and the print region surface is adjustable;
wherein the ink jet printing device comprises an ultra-violet curable phase change ink composition comprising an optional colorant and a phase change ink vehicle comprising a radiation curable monomer or prepolymer; a photoinitiator; a reactive wax; a gellant; and an amine synergist;
wherein the gellant is a compound of the formula 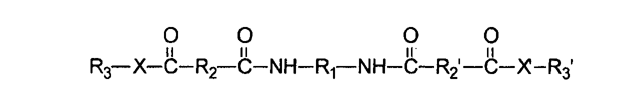
wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group; and
wherein a print deposited upon the print region surface is Braille, raised print, or a combination of regular print and one or both Braille and raised print.

2. The ink jet printing device according to claim 1, wherein the ink jet head is a full color ink jet print head with channels for jetting each of cyan, magenta, yellow and black, and wherein the ink jet print head is capable of printing either full color regular height prints when the ink jet head is set at a minimum height distance from the print region surface, or raised height prints of any color when the ink jet print head is at a distance greater than the minimum distance from the print region surface; and
wherein the ink jet printing device includes a height adjustment mechanism for adjusting the height distance of the ink jet print head from the print region surface.

3. The ink jet printing device according to claim 1 or 2, wherein the at least one curable monomer or prepolymer is a multifunctional acrylate or methacrylate compound.

4. The ink jet printing device according to claim 3, wherein the multifunctional acrylate or methacrylate compound is propoxylated neopentyl glycol diacrylate, pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, hexanediol diacrylate, tripropylene glycol diacrylate, dipropylene glycol diacrylate, amine modified polyether acrylate, trimethylolpropane triacrylate, glycerol propoxylate triacrylate, dipentaerythritol pentaacrylate, dipentaerythritol hexaacrylate, ethoxylated pentaerythritol tetraacrylate, or mixtures or combinations thereof.

5. The ink jet printing device according to any of claims 1 to 4, wherein the photoinitiator is selected from the group consisting of benzyl ketones, monomeric hydroxyl ketones, α-amino ketones, acyl phosphine oxides, metallocenes, benzophenone, benzophenone derivatives, isopropyl thioxanthenones, arylsulphonium salts and aryl iodonium salts.

6. The ink jet printing device according to any of claims 1 to 5, wherein the reactive wax is a hydroxyl-terminated polyethylene wax functionalized with a polymerizable group.

7. The ink jet printing device according to any of claims 1 to 6, wherein the gellant is a mixture of 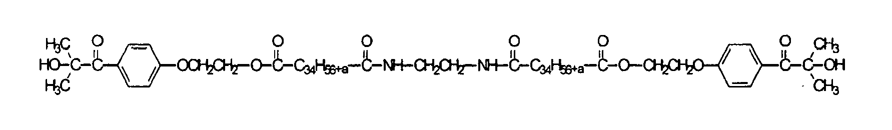 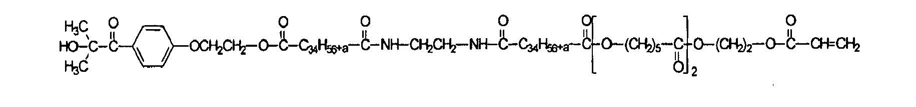 and 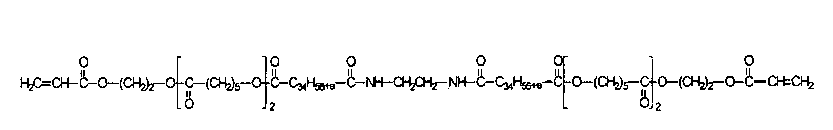 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

8. A method for forming an image on a substrate with an ink jet printing device comprising an ink jet print head and a print region surface toward which ink is jetted from the ink jet print head, wherein a height distance between the ink jet print head and the print region surface is adjustable, wherein the ink jet print head jets an ultra-violet curable phase change ink composition comprising an optional colorant and a phase change ink vehicle comprising a radiation curable monomer or prepolymer; a photoinitiator; a reactive wax; a gellant; and an amine synergist;
wherein the gellant is a compound of the formula 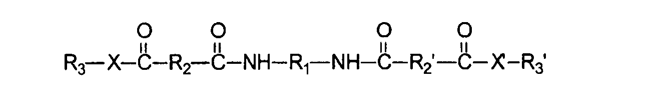 wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group;
the method comprising
determining if the image is to be printed having a regular print height, a raised print height, or a combination of both, and
printing the image with the print height(s) by jetting ink from the ink jet print head, wherein for images or portions thereof to have a raised print height, forming the raised print height by depositing multiple layers of the ink in locations of the image or portion thereof to have the raised print height, and adjusting to increase the height distance between the ink jet print head and the print region surface as necessary to prevent the raised print locations from contacting the ink jet print head during formation; and
wherein a print deposited upon the print region surface is Braille, or a combination of regular print and one or both of Braille and raised print.

9. The method according to claim 8, wherein each layer of the curable ink in a multilayer raised print location is cured prior to deposition of a subsequent layer.

10. The method according to claim 8 or 9, wherein multiple layers of the curable ink at raised print locations are cured upon completion of deposition of a last of the multiple layers.

11. The method according to any of claims 8 to 10, wherein each ink layer has a print height of from 5 µm to 15 µm.

12. The method according to any of claims 8 to 11, wherein the at least one curable monomer or prepolymer is a multifunctional acrylate or methacrylate compound.

13. The method according to any of claims 8 to 12, wherein the photoinitiator is selected from the group consisting of benzyl ketones, monomeric hydroxyl ketones, α-amino ketones, acyl phosphine oxides, metallocenes, benzophenone, benzophenone derivatives, isopropyl thioxanthenones, arylsulphonium salts and aryl iodonium salts.

14. The method according to any of claims 8 to 13, wherein the gellant is a mixture of 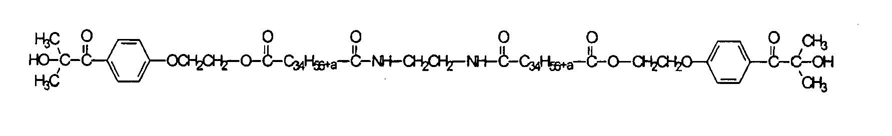 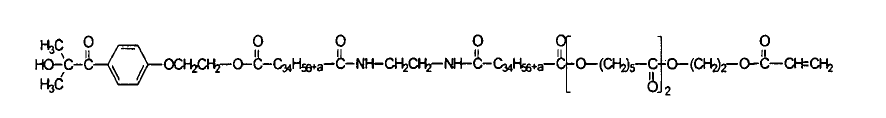 and 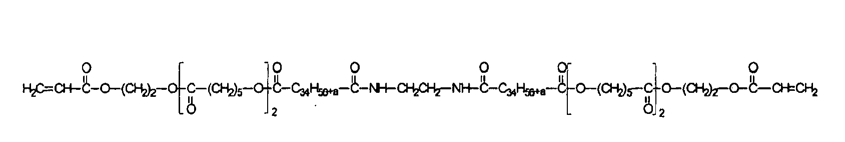 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

## Patentansprüche

1. Tintenstrahldruckvorrichtung, umfassend:
einen Tintenstrahldruckkopf und eine Druckbereichsoberfläche auf die Tinte aus dem Tintenstrahldruckkopf ausgestoßen wird, und worin ein Höhenabstand zwischen dem Tintenstrahldruckkopf und der Druckbereichsoberfläche eingestellt werden kann;
worin die Tintenstrahldruckvorrichtung eine mit ultraviolettem Licht härtbare Phasenänderungs-Tintenzusammensetzung umfasst, umfassend ein optionales Färbemittel und einen Phasenänderungstintenträger umfassend ein strahlungshärtbares Monomer oder Prepolymer; einen Photoinitiator; ein reaktives Wachs; ein Geliermittel; und
einen Amin-Synergisten;
worin das Geliermittel eine Verbindung der folgenden Formel ist 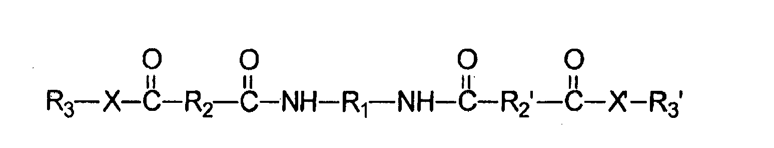
worin R₁ bedeutet: (i) eine Alkylengruppe, umfassend lineare und verzweigte, gesättigte und ungesättigte, cyclische und acyclische und substituierte und unsubstituierte Alkylengruppen, und worin Heteroatome in der Alkylengruppe vorhanden sein können oder nicht, (ii) eine Arylengruppe, umfassend substituierte und unsubstituierte Arylengruppen, und worin Heteroatome in der Arylengruppe vorhanden sein können oder nicht, (iii) eine Arylalkylengruppe, umfassend substituierte und unsubstituierte Arylalkylengruppen und worin der Alkylteil der Arylalkylengruppe linear oder verzweigt, gesättigt oder ungesättigt, und cyclisch oder acyclisch sein kann und worin Heteroatome entweder in dem Aryl- oder dem Alkylteil der Arylalkylengruppe vorhanden sein können oder nicht, oder (iv) eine Alkylarylengruppe, umfassend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder in dem Aryl- oder in dem Alkylteil der Alkylarylengruppe vorhanden sein können oder nicht, R₂ und R₂ unabhängig voneinander jeweils bedeuten: (i) Alkylengruppen, umfassend lineare und verzweigte, gesättigte und ungesättigte, cyclische und acyclische und substituierte und unsubstituierte Alkylengruppen, und worin Heteroatome in der Alkylengruppe vorhanden sein können oder nicht, (ii) Arylengruppen, umfassend substituierte und unsubstituierte Arylengruppen, und worin Heteroatome in der Arylengruppe vorhanden sein können oder nicht, (iii) Arylalkylengruppen, umfassend substituierte und unsubstituierte Arylalkylengruppen und worin der Alkylteil der Arylalkylengruppe linear oder verzweigt,
gesättigt oder ungesättigt, und cyclisch oder acyclisch sein kann und worin Heteroatome entweder in dem Aryl- oder dem Alkylteil der Arylalkylengruppe vorhanden sein können oder nicht, oder (iv) Alkylarylengruppen, umfassend substituierte und
unsubstituierte Alkylarylengruppen, worin der Alkylteil der Alkylarylengruppe linear oder verzweigt, gesättigt oder ungesättigt und cyclisch oder acyclisch sein kann und
worin Heteroatome entweder in dem Aryl- oder in dem Alkylteil der Alkylarylengruppe vorhanden sein können oder nicht, R₃ und R₃ unabhängig voneinander entweder (a) photoinitiierende Gruppen, oder (b) folgende Gruppen bedeuten: (i) Alkylgruppen,
umfassend lineare und verzweigte, gesättigte und ungesättigte, cyclische und acyclische und substituierte und unsubstituierte Alkylgruppen, worin Heteroatome in der Alkylgruppe vorhanden sein können oder nicht, (ii) Arylgruppen, umfassend substituierte und unsubstituierte Arylgruppen, worin Heteroatome in der Arylgruppe vorhanden sein können oder nicht, (iii) Arylalkylgruppen, umfassend substituierte und unsubstituierte Arylalkylgruppen, worin der Alkylteil der Arylalkylgruppe linear oder verzweigt, gesättigt oder ungesättigt, und cyclisch oder acyclisch sein kann und worin Heteroatome entweder in dem Aryl- oder dem Alkylteil der Arylalkylgruppe vorhanden sein können oder nicht, oder (iv) Alkylarylgruppen, umfassend substituierte und unsubstituierte Alkylarylgruppen, worin der Alkylteil der Alkylarylgruppe entweder linear oder verzweigt, gesättigt oder ungesättigt und cyclisch oder acyclisch sein kann und
worin Heteroatome entweder in dem Aryl- oder in dem Alkylteil der Alkylarylgruppe vorhanden sein können oder nicht, und X und X' unabhängig voneinander jeweils ein Sauerstoffatom oder eine Gruppe der Formel -NR₄- bedeuten, worin R₄ (i) ein Wasserstoffatom, (ii) eine Alkylgruppe, umfassend lineare und verzweigte, gesättigte und
ungesättigte, cyclische und acyclische und substituierte und unsubstituierte Alkylgruppen, und worin Heteroatome in der Alkylgruppe vorhanden sein können oder
nicht, (iii) eine Arylgruppe, umfassend substituierte und unsubstituierte Arylgruppen,
und worin Heteroatome in der Arylgruppe vorhanden sein können oder nicht, (iv) eine
Arylalkylgruppe, umfassend substituierte und unsubstituierte Arylalkylgruppen, worin der Alkylteil der Arylalkylgruppe linear oder verzweigt, gesättigt oder ungesättigt, und
cyclisch oder acyclisch sein kann und worin Heteroatome entweder in dem Aryl- oder
dem Alkylteil der Arylalkylgruppe vorhanden sein können oder nicht, oder (v) eine Alkylarylgruppe ist, umfassend substituierte und unsubstituierte Alkylarylgruppen, worin der Alkylteil der Alkylarylgruppe linear oder verzweigt, gesättigt oder ungesättigt und
cyclisch oder acyclisch sein kann und worin Heteroatome entweder in dem Aryl- oder
in dem Alkylteil der Alkylarylgruppe vorhanden sein können oder nicht; und
worin ein auf der Druckbereichsoberfläche aufgetragener Druck Braille, ein erhabener Druck oder eine Kombination aus normalem Druck und einem oder beiden von Braille und erhabenem Druck ist.

2. Tintenstrahldruckvorrichtung gemäß Anspruch 1, worin der Tintenstrahlkopf ein Vollfarben-Tintenstrahldruckkopf ist mit Kanälen zum Ausstoßen von jeder Farbe von Cyan, Magenta, Gelb und Schwarz, und worin der Tintenstrahldruckkopf entweder Vollfarbdrucke mit normaler Höhe drucken kann, wenn der Tintenstrahldruckkopf mit einem minimalen Höhenabstand von der Druckbereichsoberfläche eingestellt ist, oder erhabene Drucke einer beliebigen Farbe, wenn der Tintenstrahldruckkopf in einem Abstand größer als der Minimalabstand von der Druckbereichsoberfläche eingestellt ist; und
worin die Tintenstrahldruckvorrichtung einen Höhenregulierungsmechanismus zum Einstellen des Höhenabstands des Tintenstrahldruckkopfs von der Druckbereichsoberfläche umfasst.

3. Tintenstrahldruckvorrichtung gemäß Anspruch 1 oder 2, worin das mindestens eine härtbare Monomer oder Prepolymer eine multifunktionale Acrylat- oder MethacrylatVerbindung ist.

4. Tintenstrahldruckvorrichtung gemäß Anspruch 3, worin die multifunktionale Acrylatoder Methacrylat-Verbindung ein propoxyliertes Neopentylglycoldiacrylat, Pentaerythritoltetraacrylat, Pentaerythritoltetramethacrylat, 1,2-Ethylenglycoldiacrylat, 1,2-Ethylenglycoldimethacrylat, 1,6-Hexandioldiacrylat, 1,6-Hexandioldimethacrylat, 1,12-Dodecanoldiacrylat, 1,12-Dodecanoldimethacrylat, tris(2-Hydroxyethyl)-isocyanurattriacrylat, Hexandioldiacrylat, Tripropylenglycoldiacrylat, Dipropylenglycoldiacrylat, aminmodifiziertes Poly-etheracrylat, Trimethylolpropantriacrylat, Glycerinpropoxylattriacrylat, Dipenta-erythritolpentaacrylat, Dipentaerythritolhexaacrylat, ethoxyliertes Pentaerythritol-tetraacrylat oder Mischungen oder Kombinationen davon ist.

5. Tintenstrahldruckvorrichtung gemäß einem der Ansprüche 1 bis 4, worin der Photoinitiator gewählt wird aus der Gruppe bestehend aus Benzylketonen, monomeren Hydroxylketonen, α-Aminoketonen, Acylphosphinoxiden, Metallocenen, Benzophenon, Benzophenonderivativen, Isopropylthioxanthenonen, Arylsulphoniumsalzen und Aryliodoniumsalzen.

6. Tintenstrahldruckvorrichtung gemäß einem der Ansprüche 1 bis 5, worin das reaktive Wachs ein Hydroxyl-terminiertes Polyethylenwachs ist, das mit einer polymerisierbaren Gruppe funktionalisiert ist.

7. Tintenstrahldruckvorrichtung gemäß einem der Ansprüche 1 bis 6, worin das Geliermittel eine Mischung ist aus 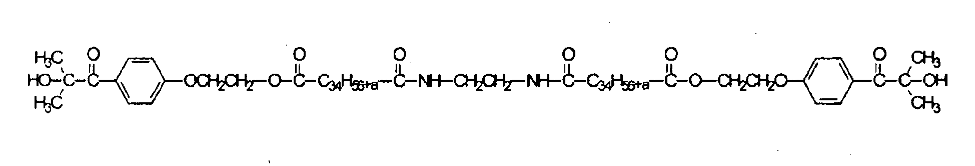 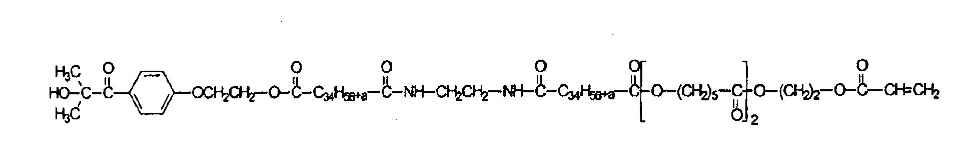 und 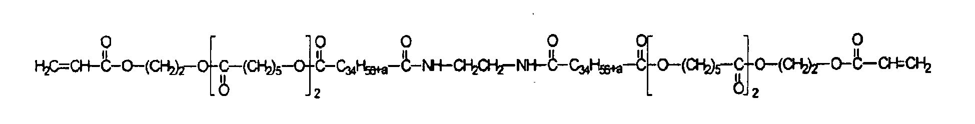 worin -C₃₄H₅₆₊ₐ- eine verzweigte Alkylengruppe bedeutet, die ungesättigte und cyclische Gruppen, substituierte und unsubstituierte Alkylengruppen enthalten kann oder nicht, und worin Heteroatome in der Alkylengruppe enthalten sein können oder nicht, und worin a eine ganze Zahl von 0, 1, 2, 3, 4, 5, 6, 7, 8, 9, 10, 11 oder 12 ist.

8. Verfahren zur Herstellung eines Bildes auf einem Träger mit einer Tintenstrahldruckvorrichtung umfassend einen Tintenstrahldruckkopf und eine Druckbereichsoberfläche auf die Tinte aus dem Tintenstrahldruckkopf ausgestoßen wird, und worin ein Höhenabstandzwischen dem Tintenstrahldruckkopf und der Druckbereichsoberfläche eingestellt werden kann;
worin die Tintenstrahldruckvorrichtung eine mit ultraviolettem Licht härtbare Phasenänderungstintenzusammensetzung umfasst, umfassend ein optionales Färbemittel und ein Phasenänderungstintenträger umfassend ein strahlungshärtbares Monomer oder Prepolymer; einen Photoinitiator; ein reaktives Wachs; ein Geliermittel; und einen Amin-Synergisten;
worin das Geliermittel eine Verbindung der folgenden Formel ist 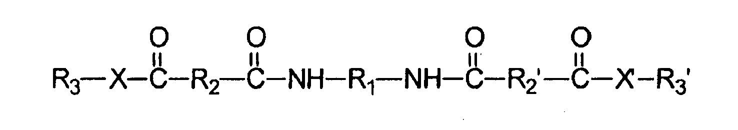 worin R₁ bedeutet: (i) eine Alkylengruppe, umfassend lineare und verzweigte, gesättigte und ungesättigte, cyclische und acyclische und substituierte und unsubstituierte Alkylengruppen, und worin Heteroatome in der Alkylengruppe vorhanden sein können oder nicht, (ii) eine Arylengruppe, umfassend substituierte und unsubstituierte Arylengruppen, und worin Heteroatome in der Arylengruppe vorhanden sein können oder nicht, (iii) eine Arylalkylengruppe, umfassend substituierte und unsubstituierte Arylalkylengruppen und worin der Alkylteil der Arylalkylengruppe linear oder verzweigt, gesättigt oder ungesättigt, und cyclisch oder acyclisch sein kann und worin Heteroatome entweder in dem Aryl- oder dem Alkylteil der Arylalkylengruppe vorhanden sein können oder nicht, oder (iv) eine Alkylarylengruppe, umfassend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder in dem Aryl- oder in dem Alkylteil der Alkylarylengruppe vorhanden sein können oder nicht, R₂ und R₂' unabhängig voneinander jeweils bedeuten: (i) Alkylengruppen, umfassend lineare und verzweigte, gesättigte und ungesättigte, cyclische und acyclische und substituierte und unsubstituierte Alkylengruppen, und worin Heteroatome in der Alkylengruppe vorhanden sein können oder nicht, (ii) Arylengruppen, umfassend substituierte und unsubstituierte Arylengruppen, und worin Heteroatome in der Arylengruppe vorhanden sein können oder nicht, (iii) Arylalkylengruppen, umfassend substituierte und unsubstituierte Arylalkylengruppen und worin der Alkylteil der Arylalkylengruppe linear oder verzweigt, gesättigt oder ungesättigt, und cyclisch oder acyclisch sein kann und worin Heteroatome entweder in dem Aryl- oder dem Alkylteil der Arylalkylengruppe vorhanden sein können oder nicht, oder (iv) Alkylarylengruppen, umfassend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder in dem Aryl- oder in dem Alkylteil der Alkylarylengruppe vorhanden sein können oder nicht, R₃ und R₃' unabhängig voneinander entweder (a) photoinitiierende Gruppen, oder (b) folgende Gruppen bedeuten: (i) Alkylgruppen, umfassend lineare und verzweigte, gesättigte und ungesättigte, cyclische und acyclische und substituierte und unsubstituierte Alkylgruppen, worin Heteroatome in der Alkylgruppe vorhanden sein können oder nicht, (ii) Arylgruppen, umfassend substituierte und unsubstituierte Arylgruppen, worin Heteroatome in der Arylgruppe vorhanden sein können oder nicht, (iii) Arylalkylgruppen, umfassend substituierte und unsubstituierte Arylalkylgruppen, worin der Alkylteil der Arylalkylgruppe linear oder verzweigt, gesättigt oder ungesättigt, und cyclisch oder acyclisch sein kann und worin Heteroatome entweder in dem Aryl- oder dem Alkylteil der Arylalkylgruppe vorhanden sein können oder nicht, oder (iv) Alkylarylgruppen, umfassend substituierte und unsubstituierte Alkylarylgruppen, worin der Alkylteil der Alkylarylgruppe entweder linear oder verzweigt, gesättigt oder ungesättigt und cyclisch oder acyclisch sein kann und worin Heteroatome entweder in dem Aryl- oder in dem Alkylteil der Alkylarylgruppe vorhanden sein können oder nicht, und X und X' unabhängig voneinander jeweils ein Sauerstoffatom oder eine Gruppe der Formel -NR₄- bedeuten, worin R₄ (i) ein Wasserstoffatom, (ii) eine Alkylgruppe, umfassend lineare und verzweigte, gesättigte und ungesättigte, cyclische und acyclische und substituierte und unsubstituierte Alkylgruppen, und worin Heteroatome in der Alkylgruppe vorhanden sein können oder nicht, (iii) eine Arylgruppe, umfassend substituierte und unsubstituierte Arylgruppen, und worin Heteroatome in der Arylgruppe vorhanden sein können oder nicht, (iv) eine Arylalkylgruppe, umfassend substituierte und unsubstituierte Arylalkylgruppen, worin der Alkylteil der Arylalkylgruppe linear oder verzweigt, gesättigt oder ungesättigt, und cyclisch oder acyclisch sein kann und worin Heteroatome entweder in dem Aryl- oder dem Alkylteil der Arylalkylgruppe vorhanden sein können oder nicht, oder (v) eine Alkylarylgruppe ist, umfassend substituierte und unsubstituierte Alkylarylgruppen, worin der Alkylteil der Alkylarylgruppe linear oder verzweigt, gesättigt oder ungesättigt und cyclisch oder acyclisch sein kann und worin Heteroatome entweder in dem Aryl- oder in dem Alkylteil der Alkylarylgruppe vorhanden sein können oder nicht;
wobei das Verfahren folgende Schritte umfasst:
Bestimmen ob das zu druckende Bild eine reguläre Druckhöhe, eine erhabene Druckhöhe oder eine Kombination aus beidem aufweisen soll, und
Drucken des Bildes mit der Druckhöhe / den Druckhöhen durch Ausstoßen der Tinte aus dem Tintenstrahldruckkopf,
worin für Bilder oder Teile davon, die eine erhabene Druckhöhe haben sollen, die erhabene Druckhöhe gebildet wird durch Auftragen von mehreren Schichten der Tinte an Orten des Bildes oder Teilen davon, die die erhabene Druckhöhe aufweisen sollen, und Einstellen des Anstiegs des Höhenabstandes zwischen dem Tintenstrahldruckkopf und der Druckbereichsoberfläche wie notwendig um zu verhindern, dass die erhabenen Druckstellen den Tintenstrahldruckkopf während der Druckerzeugung berühren; und
worin ein auf der Druckbereichsoberfläche abgeschiedener Druck Braille, eine Kombination aus normalem Druck und einem oder beiden gewählt aus Braille und erhabenem Druck ist.

9. Verfahren gemäß Anspruch 8, worin jede Schicht der härtbaren Tinte an einem mehrschichtigen erhabenen Druckort gehärtet wird, bevor eine nachfolgende Schicht aufgetragen wird.

10. Verfahren gemäß Anspruch 8 oder 9, worin mehrere Schichten der härtbaren Tinte an erhabenen Druckorten gehärtet werden nach Abschluss des Auftrags der letzten dermehreren Schichten.

11. Verfahren gemäß einem der Ansprüche 8 bis 10, worin jede Tintenschicht eine Druckhöhe von 5 µm bis 15 µm aufweist.

12. Verfahren gemäß einem der Ansprüche 8 bis 11, worin das mindestens eine härtbare Monomer oder Prepolymer eine multifunktionale Acrylat- oder Methacrylat-Verbindung ist.

13. Verfahren gemäß einem der Ansprüche 8 bis 12, worin der Photoinitiator gewählt wird aus der Gruppe bestehend aus Benzylketonen, monomeren Hydroxylketonen, α-Aminoketonen, Acylphosphinoxiden, Metallocenen, Benzophenon, Benzophenonderivativen, Isopropylthioxanthenonen, Arylsulphoniumsalzen und Aryliodoniumsalzen.

14. Verfahren gemäß einem der Ansprüche 8 bis 13, worin das Geliermittel eine Mischung ist aus 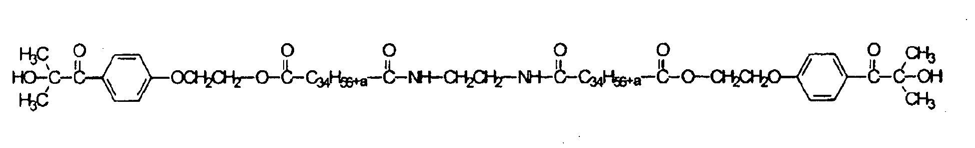 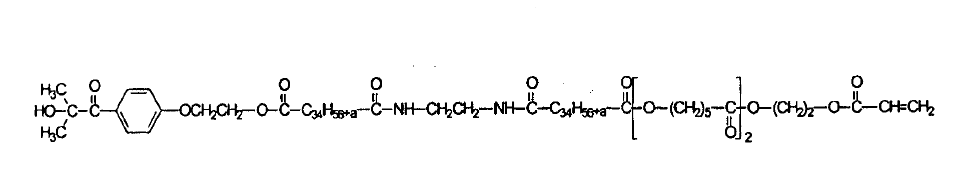 und 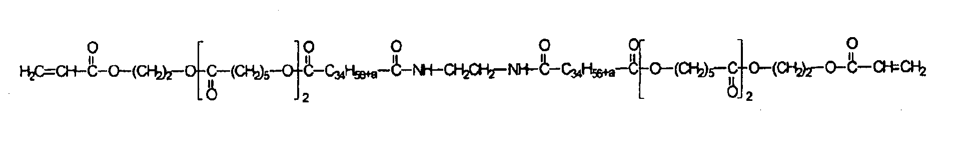 worin -C₃₄H₅₆₊ₐ- eine verzweigte Alkylengruppe bedeutet, die ungesättigte und cyclische Gruppen, substituierte und unsubstituierte Alkylengruppen enthalten kann oder nicht, und worin Heteroatome in der Alkylengruppe enthalten sein können oder nicht, und worin a eine ganze Zahl von 0, 1, 2, 3, 4, 5, 6, 7, 8, 9, 10, 11 oder 12 ist.

## Revendications

1. Dispositif d'impression par jet d'encre comprenant :
une tête d'impression par jet d'encre et une surface de région d'impression vers laquelle une encre est projetée à partir de la tête d'impression par jet d'encre, dans lequel une distance en hauteur entre la tête d'impression par jet d'encre et la surface de région d'impression est ajustable ;
dans lequel le dispositif d'impression par jet d'encre comprend une composition d'encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; un gélifiant ; et un synergiste amine ;
dans lequel le gélifiant est un composé de la
formule 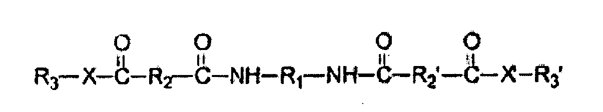
dans laquelle R₁ est (i) un groupe alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) un groupe arylène, incluant des groupes arylène substitués et non substitués, et dans lequel des hétéroatomes peuvent être ou non présents dans le groupe arylène, (iii) un groupe arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou la partie alkyle du groupe arylalkylène, ou (iv) un groupe alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou la partie alkyle du groupe alkylarylène, R₂ et R₂', chacun indépendamment de l'autre, sont (i) des groupes alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) des groupes arylène, incluant des groupes arylène substitués et non substitués, et dans lequel des hétéroatomes peuvent être ou non présents dans le groupe arylène, (iii) des groupes arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou la partie alkyle du groupe arylalkylène, ou (iv) des groupes alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou la partie alkyle du groupe alkylarylène, R₃ et R₃', chacun indépendamment de l'autre, sont soit (a) des groupes de photoinitiation, soit (b) des groupes qui sont (i) des groupes alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (ii) des groupes aryle, incluant des groupes aryle substitués et non substitués, et dans lequel des hétéroatomes peuvent être ou non présents dans le groupe aryle, (iii) des groupes arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou la partie alkyle du groupe arylalkyle, ou (iv) des groupes alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou la partie alkyle du groupe alkylaryle, et X et X', chacun indépendamment de l'autre, sont un atome d'oxygène ou un groupe de la formule -NR₄-, dans laquelle R₄ est (i) un atome d'hydrogène, (ii) un groupe alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (iii) un groupe aryle, incluant des groupes aryle substitués et non substitués, et dans lequel des hétéroatomes peuvent être ou non présents dans le groupe aryle, (iv) un groupe arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou la partie alkyle du groupe arylalkyle, ou (v) un groupe alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou la partie alkyle du groupe alkylaryle ; et
dans lequel une impression déposée sur la surface de région d'impression est du Braille, une impression en relief, ou une combinaison d'une impression normale et d'un ou des deux parmi du Braille et une impression en relief.

2. Dispositif d'impression par jet d'encre selon la revendication 1, dans lequel la tête d'impression par jet d'encre est une tête d'impression par jet d'encre de couleurs primaires avec des canaux pour projeter chacun parmi un cyan, un magenta, un jaune et un noir, et dans lequel la tête d'impression par jet d'encre est apte à imprimer soit des impressions en couleurs primaires de hauteur normale lorsque la tête de jet d'encre est réglée à une distance minimum en hauteur par rapport à la surface de région d'impression, soit des impressions en relief d'une couleur quelconque lorsque la tête d'impression par jet d'encre est à une distance supérieure à la distance minimum par rapport à la surface de région d'impression ; et
dans lequel le dispositif d'impression par jet d'encre inclut un mécanisme d'ajustement de hauteur pour ajuster la distance en hauteur de la tête d'impression par jet d'encre par rapport à la surface de région d'impression.

3. Dispositif d'impression par jet d'encre selon la revendication 1 ou 2, dans lequel l'au moins un monomère ou prépolymère durcissable est un composé acrylate ou méthacrylate multifonctionnel.

4. Dispositif d'impression par jet d'encre selon la revendication 3, dans lequel le composé acrylate ou méthacrylate multifonctionnel est un diacrylate de néopentyle glycol propoxylé, un tétraacrylate de pentaérythritol, un tétraméthacrylate de pentaérythritol, un diacrylate de 1,2-éthylène glycol, un diméthacrylate de 1,2-éthylène glycol, un diacrylate de 1,6-hexanediol, un diméthacrylate de 1,6-hexanediol, un diacrylate de 1,12-dodécanol, un diméthacrylate de 1,12-dodécanol, un isocyanurate-triacrylate de tris(2-hydroxyéthyle), un diacrylate d'hexanediol, un diacrylate de tripropylène glycol, un diacrylate de dipropylène glycol, un poly(acrylate d'éther) modifié avec une amine, un triacrylate de triméthylolpropane, un propoxylatetriacrylate de glycérol, un pentaacrylate de dipentaérythritol, un hexaacrylate de dipentaérythritol, un tétraacrylate de pentaérythritol éthoxylé, ou des mélanges ou des combinaisons de ceux-ci.

5. Dispositif d'impression par jet d'encre selon l'une quelconque des revendications 1 à 4, dans lequel le photoinitiateur est choisi parmi le groupe consistant en des benzylcétones, des hydroxylcétones monomériques, des α-aminocétones, des oxydes d'acylphosphine, des métallocènes, une benzophénone, des dérivés de benzophénone, des isopropylthioxanthénones, des sels arylsulfonium et des sels aryliodonium.

6. Dispositif d'impression par jet d'encre selon l'une quelconque des revendications 1 à 5, dans lequel la cire réactive est une cire d'un polyéthylène terminé par un hydroxyle fonctionnalisée avec un groupe polymérisable.

7. Dispositif d'impression par jet d'encre selon l'une quelconque des revendications 1 à 6, dans lequel le gélifiant est un mélange de 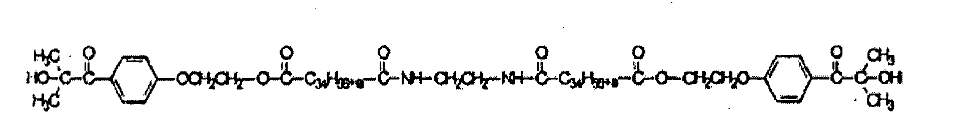 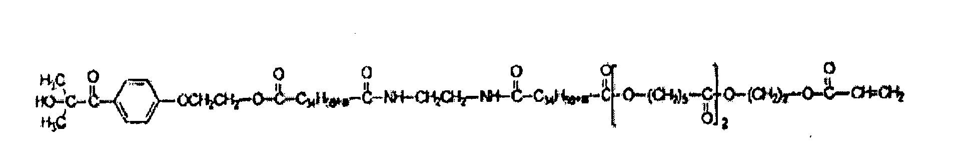 et 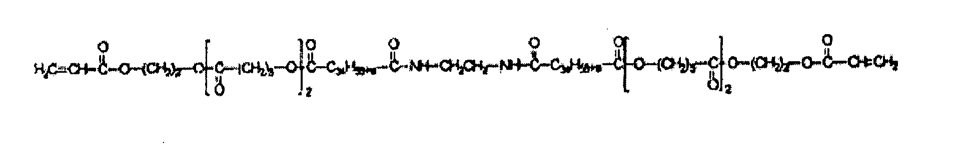 dans lesquelles -C₃₄H₅₆₊ₐ- représente un groupe alkylène ramifié, qui peut inclure ou non des insaturations et des groupes cycliques, des groupes alkylène substitués et non substitués, et dans lesquels des hétéroatomes peuvent être ou non présents dans le groupe alkylène, dans laquelle a est un entier de 0, 1, 2, 3, 4, 5, 6, 7, 8, 9, 10, 11, ou 12.

8. Procédé de formation d'une image sur un substrat avec un dispositif d'impression par jet d'encre comprenant une tête d'impression par jet d'encre et une surface de région d'impression vers laquelle une encre est projetée à partir de la tête d'impression par jet d'encre, dans lequel une distance en hauteur entre la tête d'impression par jet d'encre et la surface de région d'impression est ajustable, dans lequel la tête d'impression par jet d'encre projette une composition d'encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; un gélifiant ; et un synergiste amine ;
dans lequel le gélifiant est un composé de la
formule 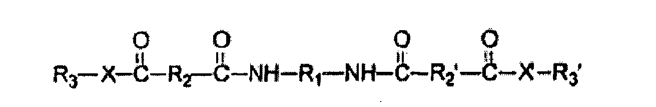 dans laquelle R₁ est (i) un groupe alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) un groupe arylène, incluant des groupes arylène substitués et non substitués, et dans lequel des hétéroatomes peuvent être ou non présents dans le groupe arylène, (iii) un groupe arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou la partie alkyle du groupe arylalkylène, ou (iv) un groupe alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou la partie alkyle du groupe alkylarylène, R₂ et R₂', chacun indépendamment de l'autre, sont (i) des groupes alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) des groupes arylène, incluant des groupes arylène substitués et non substitués, et dans lequel des hétéroatomes peuvent être ou non présents dans le groupe arylène, (iii) des groupes arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou la partie alkyle du groupe arylalkylène, ou (iv) des groupes alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou la partie alkyle du groupe alkylarylène, R₃ et R₃', chacun indépendamment de l'autre, sont soit (a) des groupes de photoinitiation, soit (b) des groupes qui sont (i) des groupes alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (ii) des groupes aryle, incluant des groupes aryle substitués et non substitués, et dans lequel des hétéroatomes peuvent être ou non présents dans le groupe aryle, (iii) des groupes arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou la partie alkyle du groupe arylalkyle, ou (iv) des groupes alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou la partie alkyle du groupe alkylaryle, et X et X', chacun indépendamment de l'autre, sont un atome d'oxygène ou un groupe de la formule -NR₄-, dans laquelle R₄ est (i) un atome d'hydrogène, (ii) un groupe alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (iii) un groupe aryle, incluant des groupes aryle substitués et non substitués, et dans lequel des hétéroatomes peuvent être ou non présents dans le groupe aryle, (iv) un groupe arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou la partie alkyle du groupe arylalkyle, ou (v) un groupe alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou la partie alkyle du groupe alkylaryle ;
le procédé comprenant
la détermination si l'image doit être imprimée en ayant une hauteur d'impression normale, une hauteur d'impression en relief, ou une combinaison des deux, et
l'impression de l'image avec la/les hauteur(s) d'impression en projetant une encre à partir de la tête d'impression par jet d'encre,
dans lequel, pour des images ou des parties de celles-ci destinées à avoir une hauteur d'impression en relief, la formation de la hauteur d'impression en relief en déposant des couches multiples de l'encre en des emplacements de l'image ou d'une partie de celle-ci destinée à avoir la hauteur d'impression en relief, et l'ajustement pour augmenter la distance en hauteur entre la tête d'impression par jet d'encre et la surface de région d'impression comme nécessaire pour empêcher que les emplacements d'impression en relief ne viennent au contact de la tête d'impression par jet d'encre pendant la formation ; et
dans lequel une impression déposée sur la surface de région d'impression est du Braille, ou une combinaison d'une impression normale et d'un ou des deux parmi du Braille et une impression en relief.

9. Procédé selon la revendication 8, dans lequel chaque couche de l'encre durcissable dans un emplacement d'impression en relief multicouche est durcie avant le dépôt d'une couche suivante.

10. Procédé selon la revendication 8 ou 9, dans lequel des couches multiples de l'encre durcissable en des emplacements d'impression en relief sont durcies à la fin du dépôt d'une dernière parmi les couches multiples.

11. Procédé selon l'une quelconque des revendications 8 à 10, dans lequel chaque couche d'encre a une hauteur d'impression de 5 µm à 15 µm.

12. Procédé selon l'une quelconque des revendications 8 à 11, dans lequel l'au moins un monomère ou prépolymère durcissable est un composé acrylate ou méthacrylate multifonctionnel.

13. Procédé selon l'une quelconque des revendications 8 à 12, dans lequel le photoinitiateur est choisi parmi le groupe consistant en des benzylcétones, des hydroxylcétones monomériques, des α-aminocétones, des oxydes d'acylphosphine, des métallocènes, une benzophénone, des dérivés de benzophénone, des isopropylthioxanthénones, des sels arylsulfonium et des sels aryliodonium.

14. Procédé selon l'une quelconque des revendications 8 à 13, dans lequel le gélifiant est un mélange de 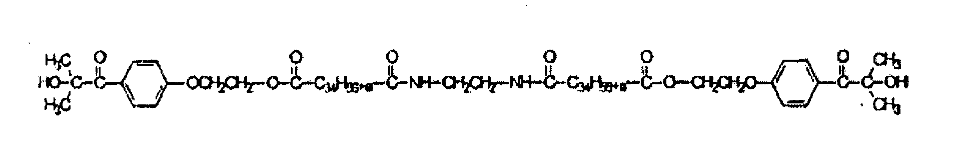 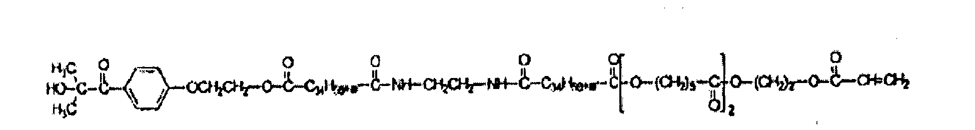 et 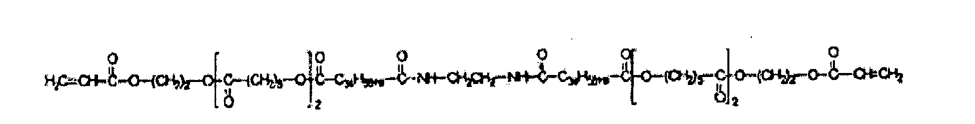 dans lesquelles -C₃₄H₅₆₊ₐ- représente un groupe alkylène ramifié, qui peut inclure ou non des insaturations et des groupes cycliques, des groupes alkylène substitués et non substitués, et dans lesquels des hétéroatomes peuvent être ou non présents dans le groupe alkylène, dans laquelle a est un entier de 0, 1, 2, 3, 4, 5, 6, 7, 8, 9, 10, 11, ou 12.
